# EUROPÄISCHE PATENTSCHRIFT

(11) **EP 2 363 238 B1**
(45) Veröffentlichungstag und Bekanntmachung des Hinweises auf die Patenterteilung: **02.04.2014**
(21) Anmeldenummer: 11156324.3
(22) Anmeldetag: 28.02.2011
(51) Int. Cl.: B23Q 17/20, B23Q 17/24, B23Q 11/14

(54) **Werkzeugmaschine mit Werkstückmesseinrichtung**
Machine tool with workpiece measuring device
Machine-outil avec dispositif de mesure de la pièce

(30) Priorität: 02.03.2010 DE 102010002518
(43) Veröffentlichungstag der Anmeldung: 07.09.2011
(73) Patentinhaber: Traub Drehmaschinen GmbH & Co. KG, 73262 Reichenbach an der Fils (DE)
(72) Erfinder: Baumann, Ulrich, 73252 Lenningen (DE); Osswald, Ernst, 73262 Reichenbach (DE)
(74) Vertreter: Hoeger, Stellrecht & Partner Patentanwälte

(56) Entgegenhaltungen:
- EP-A1- 1 524 072
- EP-A2- 0 985 493
- EP-A2- 1 477 274
- DE-A1- 19 758 214
- DE-A1-102007 061 887

## Beschreibung

Die Erfindung betrifft eine Werkzeugmaschine nach dem Oberbegriff des Anspruchs 1.

Derartige Werkzeugmaschinen sind aus dem Stand der Technik bekannt (siehe, z.B., EP-1477274-A).

Bei diesen besteht das Problem, die Messeinheit in dem Arbeitsraum gegen eine Verschmutzung zu schützen.

Der Erfindung liegt daher die Aufgabe zugrunde, eine Werkzeugmaschine der gattungsgemäßen Art zu schaffen, bei welcher die Möglichkeit besteht, möglichst effizient zu überprüfen, ob die hergestellten Werkstücke mit ihren Maßen nach der Bearbeitung den Sollmaßen innerhalb eines Toleranzbereichs entsprechen oder nicht.

Diese Aufgabe wird mit einer Werkzeugmaschine nach Anspruch 1 gelöst.

Der Vorteil der erfindungsgemäßen Lösung ist darin zu sehen, dass die Möglichkeit besteht, mit großer Effizienz in dem Arbeitsraum selbst eine Vermessung des Werkstücks durchzuführen.

Insbesondere besteht die Möglichkeit, das Werkstück aufgenommen in der Werkzeugaufnahme zur Bearbeitung zu vermessen und somit die Präzision bei der Messung noch weiter zu steigern.

Ein derartiges in der Messeinheit vorgesehenes optisches Messsystem ist vorzugsweise so ausgebildet, dass es eine Strahlungsquelle sowie ein Bildaufnahmesystem umfasst, die zusammenwirken und damit auch den Messraum definieren.

Beispielsweise können eine Strahlungsquelle und ein Bildaufnahmesystem eines erfindungsgemäßen optischen Messsystems so angeordnet sein, dass zwischen diesen der Messraum liegt, so dass eine optische Vermessung insbesondere in einem sogenannten Durchlichtverfahren erfolgt.

In einem derartigen Durchlichtverfahren ist dabei der Tiefenschärfebereich so groß gewählt, dass die Positionsgenauigkeit keinen Einfluss auf die Messgenauigkeit hat.

Alternativ dazu ist es aber auch denkbar, die Strahlungsquelle sowie das Bildaufnahmesystem auf einer Seite des Messraums anzuordnen, so dass die Messung in Reflexion erfolgt. Bei einem derartigen Messverfahren ist vorzugsweise die Tiefenschärfe sehr gering, um insbesondere auch Abstandsmessungen durchführen zu können.

Bei allen optischen Messsystemen sind jedoch sowohl die Strahlungswelle als auch das Bildaufnahmesystem mit der Messeinheit in den Arbeitsraum hineinbewegbar und beiden ist jeweils auch der Messraum eindeutig zugeordnet, so dass eine Vermessung eines Werkstücks in dem Messraum so erfolgt, dass an diesen auch das Bildaufnahmesystem und die Strahlungsquelle angrenzen, wobei beide in der Messstellung auch im Arbeitsraum der Werkzeugmaschine angeordnet sind.

Die erfindungsgemäße Lösung erlaubt somit ein hochpräzises Vermessen von Werkstücken unmittelbar im Arbeitsraum mit einer Präzision, die bis in den Mikrometerbereich reicht.

Hinsichtlich der Position der Messeinheit in der Ruhestellung wurden bislang keine näheren Angaben gemacht.

So könnte es beispielsweise denkbar sein, die Messeinheit in der Ruhestellung auch im Arbeitsraum, insbesondere in einem gesonderten Abschnitt desselben zu belassen.

Dies hat jedoch den Nachteil, dass damit die Messeinheit hermetisch gegen eine Verschmutzung zu schützen wäre, die dadurch auftreten würde, dass in dem Arbeitsraum eine reguläre Bearbeitung der Werkstücke, insbesondere eine spanabhebende Bearbeitung der Werkstücke mit einem Kühlschmierstoff, erfolgt, so dass Späne entstehen, Kühlschmierstoff im Arbeitsraum verspritzt wird und sich im Arbeitsraum dadurch auch noch ein Nebel aus Kühlschmierstoff oder eine Aerosole aus Kühlschmierstoff bildet.

Aus diesem Grund sieht eine vorteilhafte Lösung vor, dass die Messeinheit in der Ruhestellung außerhalb des Arbeitsraums angeordnet ist.

Eine derartige Anordnung der Messeinheit in der Ruhestellung schafft die Möglichkeit, sämtliche Probleme zu lösen, die mit einer Verschmutzung der Messeinheit und insbesondere auch des mindestens einen optischen Messsystems mit dem Messraum im Arbeitsraum zusammenhängen.

Dabei könnte es noch möglich sein, die Messeinheit in der Ruhestellung in einen Teil des Maschinengehäuses, allerdings außerhalb des Arbeitsraums, zu positionieren.

Besonders günstig ist es jedoch, wenn die Messeinheit in der Ruhestellung außerhalb des Maschinengehäuses angeordnet ist und somit auch thermischen Einflüssen des Maschinengehäuses nicht ausgesetzt ist.

Die Möglichkeit, die Messeinheit außerhalb des Arbeitsraums zu positionieren ergibt sich vorzugsweise dadurch, dass die Messeinheit auf ihrem Weg von der Ruhestellung in die Messstellung durch einen Durchbruch in der Seitenwand des Arbeitsraums hindurch bewegbar ist.

Der Durchbruch könnte dabei grundsätzlich an beliebiger Stelle des Arbeitsraums vorgesehen sein.

Eine besonders günstige Lösung sieht vor, dass der Durchbruch auf einer der mindestens einen Werkstückaufnahme gegenüberliegenden Seite des Arbeitsraums angeordnet ist.

Insbesondere ist es dabei günstig, wenn die Messeinheit in der Ruhestellung auf eine Umgebungstemperatur der Werkzeugmaschine temperierbar ist.

Im einfachsten Fall wird dabei die Messeinheit außerhalb des Maschinengehäuses in einem Raum positioniert, in welchem auch die Werkzeugmaschine steht, so dass die Messeinheit im Laufe der Zeit zwangsläufig die Temperatur dieses Raums annehmen kann.

Um auch in der Messstellung innerhalb des Arbeitsraums die Messeinheit möglichst auf einer Temperatur zu halten, die der Temperatur der Messeinheit außerhalb des Arbeitsraums in der Ruhestellung entspricht, ist vorzugsweise vorgesehen, dass die Messeinheit in der Messstellung durch ein gasförmiges Medium temperierbar ist.

Um ferner auch beim Einfahren der Messeinheit von der Ruhestellung in die Messstellung im Arbeitsraum eine Verschmutzung des Messsystems so gering wie möglich zu halten, ist vorzugsweise vorgesehen, dass das mindestens eine optische Messsystem durch ein zugeführtes gasförmiges Medium gegen Eindringen von Schmutz schützbar ist.

Beispielsweise stellt ein derartiges zugeführtes gasförmiges Medium ein sogenanntes "Sperrmedium" dar, welches durch seine Strömung Verschmutzungen von dem optischen Messsystem weg führt und dadurch verhindert, dass Schmutz mit dem optischen Messsystem in Berührung kommt.

Hinsichtlich der Möglichkeit, die Messeinheit in den Arbeitsraum zu bewegen und in diesem zu positionieren wurden im Zusammenhang mit der bisherigen Beschreibung der erfindungsgemäßen Lösung keine näheren Angaben gemacht.

So ist dabei vorzugsweise vorgesehen, dass die Messeinheit der Messeinrichtung längs einer Führungsbahn zwischen der Ruhestellung und der Messstellung bewegbar ist.

Eine derartige Führungsbahn könnte dabei beispielsweise eine Bahn sein, die sich dadurch ergibt, dass die Messeinrichtung an einer Strebe geführt ist, die so bewegbar ist, dass die Messeinrichtung sich längs der Führungsbahn bewegt.

Besonders günstig im Hinblick auf eine stabile Positionierung der Messeinrichtung in dem Arbeitsraum ist es jedoch wenn sich die Führungsbahn zwischen der Ruhestellung und der Messstellung in den Arbeitsraum hineinerstreckt.

Eine mechanisch besonders günstige und stabile Lösung sieht dabei vor, dass längs der Führungsbahn ein Träger, beispielsweise in der Art eines Schlittens, vorgesehen ist, welcher die Messeinheit trägt.

Ferner ist es besonders günstig, wenn die Messeinheit längs der Führungsbahn in einer Führungsrichtung bewegbar ist, die ungefähr parallel zu einer Spindelachse der mindestens einen Werkstückaufnahme verläuft.

Besonders günstig ist es, wenn die Führungsrichtung näherungsweise horizontal verläuft, um zu erreichen, dass die Schwerkraft auf die Positionierung der Messeinheit längs der Führungsbahn im Wesentlichen keinen Einfluss ausübt.

Um einerseits die Messeinheit exakt positionieren zu können und andererseits auch die Möglichkeit zu haben, durch Verfahren der Messeinheit ein Werkstück an mehreren Stellen abtasten zu können, ist vorzugsweise vorgesehen, dass die Messeinheit durch eine positionssteuerbare Vorschubeinheit längs der Führungsbahn bewegbar ist.

Eine derartige positionssteuerbare Vorschubeinheit kann in unterschiedlichster Art und Weise realisiert sein.

Eine besonders günstige Lösung sieht vor, dass die Vorschubeinheit als lineare Achse durch eine Maschinensteuerung der Werkzeugmaschine steuerbar ist.

Das heißt, dass in diesem Fall die Vorschubeinheit eine präzise positionierbare Linearachse der Werkzeugmaschine darstellt, wie andere Linearachsen derselben, beispielsweise zum Bewegen von Werkzeugträgern oder Werkzeugen.

Die Abdeckung dient insbesondere dazu, das mindestens eine optische Messsystem gegen Verschmutzung durch insbesondere aufgrund der Schwerkraftwirkung abtropfende oder abfallende flüssige und feste Medien im Arbeitsraum zu schützen.

Die Abdeckung ist dabei so gestaltet, dass sie das mindestens eine optische Messsystem überdeckt, und insbesondere auch einen diesem Messsystem zugeordneten Messraum, so dass auch der Messraum gegen eine vorstehend genannte Verschmutzung geschützt werden kann.

Eine besonders zweckmäßige Ausgestaltung der Abdeckung sieht vor, dass die Abdeckung das mindestens eine optische Messsystem gegen im Arbeitsraum abtropfende Medien schützt und diese ableitet, das heißt, dass die Abdeckung so angeordnet ist, dass sie im Arbeitsraum abtropfende Medien, die das optische Messsystem treffen könnten, von diesem fern hält, insbesondere auch von dem dem mindestens einen optischen Messsystem zugeordneten Arbeitsraum.

Die Abdeckung kann dabei als einfaches dachförmiges Teil ausgebildet sein, welches das mindestens eine optische Messsystem übergreift.

Eine besonders günstige Lösung sieht jedoch vor, dass die Abdeckung als das mindestens eine optische Messsystem umschließende Gehäuse ausgebildet ist und somit nicht nur einen Schutz gegen Eindringen von Schmutz von oben, das heißt von oben in Schwerkraftrichtung, bewirkt, sondern auch ein seitliches Eindringen von Schmutz möglichst umfassend verhindert.

Vorzugsweise ist dabei das Gehäuse so ausgebildet, dass es mindestens eine Zutrittsöffnung aufweist, durch welche das Werkstück in den Messraum des mindestens einen optischen Messsystems einführbar ist, so dass das Gehäuse nicht nur die Strahlungsquelle und das Bilderfassungssystem, sondern auch noch den Messraum gegen Eindringen von Schmutz schützt und lediglich eine Zutrittsöffnung aufweist, durch welche das Werkstück in den Messraum einführbar ist.

Noch vorteilhafter ist es, wenn das Gehäuse auf gegenüberliegenden Seiten Zutrittsöffnungen für von gegenüberliegenden Seiten in den Messraum einführbare Werkstücke aufweist.

Eine weitere Möglichkeit, einen Messraum des mindestens einen optischen Messsystems gegen eindringenden Schmutz zu schützen sieht vor, dass einem Messraum des mindestens einen optischen Messsystems eine Zufuhreinrichtung für in den Messraum einströmendes gasförmiges Medium zugeordnet ist.

Eine derartige Zufuhreinrichtung für den Messraum des mindestens einen optischen Systems kann entweder für den Fall vorgesehen sein, dass keine Abdeckung vorgesehen ist, aber auch für den Fall, dass eine Abdeckung oder gar ein Gehäuse für den Messraum vorgesehen ist.

Im Fall eines Gehäuses ist es besonders günstig, ein derartiges gasförmiges Medium zuzuführen, da sich dieses durch das Gehäuse so führen lässt, dass der Messraum in optimaler Weise von Schmutz freigehalten wird.

Besonders günstig ist es dabei, wenn die Zuführeinrichtung dem Messraum gefiltertes gasförmiges Medium zuführt, da damit auch eine Verschmutzung durch das zugeführte gasförmige Medium im Messraum verhindert werden kann.

Insbesondere im Fall eines Gehäuses ist vorgesehen, dass die Zufuhreinrichtung das gasförmige Medium einem Innenraum des Gehäuses zuführt.

Ferner lässt sich im Fall eines Gehäuses vorzugsweise das zugeführte gasförmige Medium so führen, dass dieses dem Innenraum des Gehäuses zugeführt wird und über Zutrittsöffnungen des Gehäuses abströmt und somit durch die Zutrittsöffnungen aus dem Gehäuse ausströmt und damit auch gleichzeitig ein Eindringen von Schmutz über die Zutrittsöffnungen verhindert.

Im einfachsten Fall ist dabei vorgesehen, dass die Zufuhreinrichtung als gasförmiges Medium Luft zuführt.

Eine Alternative wäre es, ein gereinigtes Gas vorzusehen.

Hinsichtlich der Ausbildung der Messeinheit wurde bislang lediglich darauf abgestellt, dass mindestens ein optisches Messsystem vorhanden ist.

Vorzugsweise kann die Messeinheit aber auch so ausgebildet sein, dass sie mehrere optische Messsysteme umfasst.

Eine Möglichkeit ist beispielsweise die, dass die Messeinheit ein optisches Messsystem umfasst, welches im Durchlichtverfahren arbeitet und ein optisches Messsystem, welches im Auflichtverfahren arbeitet.

Eine weitere vorteilhafte Lösung sieht vor, dass der Messeinheit ein mechanisches Tastsystem zugeordnet ist.

Ein derartiges mechanisches Tastsystem schafft die Möglichkeit, in einfacher Weise Vertiefungen oder Oberflächenstrukturen zu vermessen, welche einer optischen Vermessungen im Durchlichtverfahren oder Auflichtverfahren nicht zugänglich sind oder welche optisch nicht mit der notwendigen Präzision vermessen werden können.

Vorzugsweise ist dabei das mechanische Tastsystem so ausgebildet, dass es in einer Tastrichtung tastet, welche parallel zur Führungsrichtung der Führungsbahn verläuft, da in diesem Fall auch die Möglichkeit besteht, durch Verfahren der Messeinheit das mechanische Tastsystem relativ zu dem abzutastenden Bereich des Werkstücks zu bewegen.

Hinsichtlich der Frage, wie das Werkstück vor einer Vermessung behandelt werden soll, wurden im Zusammenhang mit der bisherigen Erläuterung der einzelnen Ausführungsbeispiele der erfindungsgemäßen Werkzeugmaschine keine näheren Angaben gemacht.

Prinzipiell könnte das Werkstück nach der Bearbeitung vermessen werden. Hier besteht jedoch die Gefahr, dass Spänereste oder andere Verschmutzungen oder auch Verschmutzungen durch verunreinigten Kühlschmierstoff noch auf dem Werkstück haften und somit eine Vermessung desselben, insbesondere mit einem optischen Messsystem verhindern oder verfälschen.

Aus diesem Grund sieht eine besonders günstige Lösung vor, dass die Werkzeugmaschine eine Reinigungsvorrichtung zum Reinigen des Werkstücks aufweist.

Eine Reinigungsvorrichtung könnte in unterschiedlichster Art und Weise ausgebildet sein.

Beispielsweise könnte ein Reinigungsbad vorgesehen sein, in welches das Werkstück vor der Vermessung eingetaucht werden kann.

Eine besonders einfache Lösung sieht jedoch vor, dass mit der Reinigungsvorrichtung ein Reinigungsstrahl erzeugbar ist.

Ein derartiger Reinigungsstrahl ist beispielsweise ein scharf und gezielt ausgerichteter Reinigungsstrahl eines speziellen Reinigungsmediums oder zumindest von gereinigtem Kühlschmierstoff, so dass durch diesen Reinigungsstrahl nicht noch weitere Partikel auf die Oberfläche des Werkstücks aufgebracht werden.

Alternativ oder ergänzend hierzu sieht eine weitere vorteilhafte Lösung vor, dass mit der Reinigungsvorrichtung ein Blasstrahl erzeugbar ist.

Ein derartiger Blasstrahl ist vorzugsweise ein präzise gerichteter Strahl aus einem ausgeblasenen gasförmigen Medium, im einfachsten Fall Luft, der dazu dient, Flüssigkeit und gegebenenfalls auch feste Partikel von der Oberfläche des Werkstücks zu entfernen.

Dabei könnte bei der erfindungsgemäßen Lösung die Reinigungsvorrichtung stationär im Arbeitsraum vorgesehen sein.

Um insbesondere ein Werkstück optimal reinigen zu können, insbesondere auch in möglichst universal einsetzbarer Weise, ist vorzugsweise vorgesehen, dass die Reinigungsvorrichtung relativ zum Werkstück bewegbar ist.

Eine derartige Reinigungsvorrichtung ist beispielsweise an einem Werkzeugträger angeordnet und somit durch den Werkzeugträger relativ zum Werkstück bewegbar.

Um außerdem Verschmutzungen der Messeinheit im Arbeitsraum durch das im Arbeitsraum vorhandene Medium vermeiden zu können, ist vorzugsweise vorgesehen, dass die Werkzeugmaschine eine Absaugeinrichtung aufweist, mit welcher ein Absaugen eines im Arbeitsraum vorhandenen Mediums möglich ist, so dass beispielsweise vor einem Einfahren der Messeinheit in den Arbeitsraum die Möglichkeit besteht, das in diesem vorhandene Medium, üblicherweise ein gasförmiges Medium mit einem hohen Anteil von als Aerosolen oder Tröpfchen noch schwebenden Kühlschmierstoff oder anderen Medien, abzusaugen und durch saubere Luft, vorzugsweise gereinigte Luft, zu ersetzen.

Der Vorteil der erfindungsgemäßen Lösung ist darin zu sehen, dass damit die Möglichkeit besteht, durch eine kurzzeitige Unterbrechung des Produktionsablaufs zu überprüfen, ob das Werkstück mit der erforderlichen Maßgenauigkeit bearbeitet wird oder ob Korrekturen des Bearbeitungsprogramms erforderlich sind.

Vorzugsweise ist dabei vorgesehen, dass die Maschinensteuerung den Produktionsablauf unterbricht, die Messeinrichtung von der Ruhestellung in die Messstellung bewegt, mit mindestens einem optischen Messsystem der Messeinheit das Werkstück vermisst und danach den Produktionsablauf fortsetzt, so dass keinerlei manuelle Eingriffe erforderlich sind.

Bei der vollständigen Steuerung der Vermessung des Werkstücks im Arbeitsraum ist vorzugsweise vorgesehen, dass die Maschinensteuerung bei Abweichung der gemessenen Werte des Werkstücks von Sollwerten, die größer sind als ein vorgegebener Toleranzbereich, den Produktionsablauf abbricht, das heißt, dass die Maschinensteuerung in der Lage ist, selbsttätig zu erkennen, dass gravierende Formabweichungen des Werkstücks von den Sollwerten vorliegen, die auf einen Zustand zurückzuführen sind, der durch eine selbsttätige Korrektur seitens der Maschinensteuerung nicht behebbar ist.

Beispielsweise ist ein derartiger Zustand ein Bruch eines Werkzeugs oder das Entstehen eines Grats auf dem Werkstück oder ähnliches.

Ferner ist vorzugsweise vorgesehen, dass die Maschinensteuerung bei Abweichungen der gemessenen Werte des Werkstücks von Sollwerten die in einem vorgegebenen Toleranzbereich liegen, den Produktionsablauf fortsetzt, das heißt, dass die Maschinensteuerung selbsttätig erkennt, dass zwar Abweichungen vorliegen, diese aber so sind, dass eine Fortsetzung des Produktionsablaufs möglich und zulässig ist.

Besonders vorteilhaft ist es dabei, wenn die Maschinensteuerung das Bearbeitungsprogramm entsprechend der Abweichung der gemessenen Werte des Werkstücks von den Sollwerten korrigiert.

Beispielsweise ist eine derartige Möglichkeit die, dass dadurch Werkzeugkorrekturwerte berichtigt werden, die die Abweichung von den Sollwerten bei zukünftigen Werkstücken reduzieren.

Eine derartige Korrektur des Bearbeitungsprogramms setzt vorzugsweise voraus, dass ein in der Maschinensteuerung ein Korrekturprogramm hinterlegt ist, welches aufgrund der festgestellten Abweichungen von den Sollwerten, insbesondere auch der Art der Abweichungen von den Sollwerten in der Lage ist, in geeigneter Weise das Bearbeitungsprogramm so zu korrigieren, dass die Abweichungen der gemessenen Werte des Werkstückes von den Sollwerten bei nachfolgenden Werkstücken geringer werden.

Beispielsweise lässt sich damit ein Verschleiß eines Werkzeugs oder auch eine anders geartete, beispielsweise durch thermische Ausdehnung von Maschinenkomponenten bedingte Abweichung der gemessenen Werte des Werkstücks von den Sollwerten korrigieren.

Darüber hinaus sieht eine vorteilhafte Ausführungsform des vorstehend beschriebenen Verfahrens vor, dass das Werkstück vor dem Bewegen der Messeinheit in die Messstellung in einem Reinigungsvorgang gereinigt wird.

Das heißt, dass davon ausgegangen werden muss, dass das Werkstück bei einer Unterbrechung des Produktionsablaufs durch Späne oder ähnliche Partikel oder auch durch Kühlschmierstoff verschmutzt ist und dass bei Vorliegen einer derartigen Verschmutzung keine sinnvolle Vermessung des Werkstücks, insbesondere keine sinnvolle optische Vermessung des Werkstücks möglich ist.

Aus diesem Grund erlaubt ein erfindungsgemäß vorgesehener Reinigungsvorgang, das Werkstück vor der Messung in dem Arbeitsraum der Werkzeugmaschine zu reinigen.

Vorzugsweise wird auch ein derartiger Reinigungsvorgang von der Maschinensteuerung selbsttätig nach Unterbrechung des Produktionsablaufs durchgeführt.

Ein derartiger Reinigungsvorgang kann in unterschiedlichster Art und Weise, beispielsweise durch Eintauchen des Werkstücks in ein Reinigungsbad vorgenommen werden.

Eine vorteilhafte Lösung sieht jedoch vor, dass das Werkstück bei dem Reinigungsvorgang durch Abspülen mit einem flüssigen Medium gereinigt wird.

Ein derartiges flüssiges Medium kann entweder ein separates Reinigungsmedium oder zumindest gefiltertes oder in anderer Art und Weise gereinigtes Schmiermedium oder Kühlschmierstoff sein.

Besonders effektiv lässt sich eine Reinigung dann durchführen, wenn das Werkstück durch Abspritzen mit einem gerichteten Reinigungsstrahl gereinigt wird.

Alternativ oder ergänzend zum Reinigen des Werkstücks mit einem flüssigen Medium, insbesondere einem Reinigungsstrahl, sieht eine weitere vorteilhafte Lösung des erfindungsgemäßen Verfahrens vor, dass das Werkstück durch einen Blasstrahl gereinigt wird.

Ein derartiger Blasstrahl ist ein gezielt gerichteter Strahl aus einem gasförmigen Medium, im einfachsten Fall Luft, und dient dazu, entweder Partikel oder auch flüssiges Medium, beispielsweise Kühlschmierstoff, von der Oberfläche des Werkstücks zu entfernen, um sicherzustellen, dass bei der optischen Vermessung desselben keine Fehlmessungen auftreten.

Der Blasstrahl kann alternativ zum flüssigen Reinigungsmedium, insbesondere zum Reinigungsstrahl eingesetzt werden.

Besonders vorteilhaft ist es jedoch, wenn der Blasstrahl nachfolgend zu einer Reinigung mit flüssigem Medium eingesetzt wird.

Darüber hinaus sieht eine weitere vorteilhafte Variante des erfindungsgemäßen Verfahrens vor, dass das Werkstück bei oder nach dem Reinigungsvorgang einem Schleudervorgang unterzogen wird. Ein derartiger Schleudervorgang lässt sich beispielsweise dadurch erzeugen, dass das Werkstück rotierend angetrieben wird, um Flüssigkeit oder Partikel abzuschleudern.

Um vor Durchführen der optischen Vermessung des Werkstücks im Arbeitsraum sicherzustellen, dass die Messeinheit, insbesondere das mindestens eine optische Messsystem der Messeinheit nicht durch im Arbeitsraum vorhandene Medien, das heißt beispielsweise Aerosol von Kühlschmierstoff oder Reinigungsmedium oder unmittelbar noch vorhandenem flüssigen Kühlschmierstoff oder Reinigungsmedium verschmutzt wird, ist vorzugsweise vorgesehen, dass vor dem Bewegen der Messeinheit in die Messstellung ein Absaugen eines im Arbeitsraum vorliegenden Mediums erfolgt.

Ein derartiges Absaugen des im Arbeitsraum vorliegenden Medium schafft mindestens die Möglichkeit, den im Arbeitsraum vorhandenen Nebel aus Kühlschmierstoff oder Reinigungsmedium oder die im Arbeitsraum vorhandenen Aerosole aus Kühlschmierstoff und Reinigungsmedium weitgehend zu entfernen und somit ein Eindringen derselben in die Messeinheit und die damit verbundene Verschmutzung des mindestens einen optischen Messsystems zu vermeiden.

Auch ein derartiges Absaugen des im Arbeitsraum vorliegenden Mediums erfolgt vorzugsweise gesteuert durch die Maschinensteuerung, so dass mit der erfindungsgemäßen Lösung die Möglichkeit geschaffen ist, allein gesteuert durch die Maschinensteuerung den Produktionsablauf zu unterbrechen, das Werkstück zu reinigen, das im Arbeitsraum vorhandene Medium abzusaugen, die optische Messung durchzuführen und danach gegebenenfalls den Produktionsablauf fortzusetzen, ohne dass ein manueller Eingriff möglich ist.

Ferner schafft die erfindungsgemäße Lösung insbesondere auch die Möglichkeit, das Bearbeitungsprogramm entsprechend den Ergebnissen der Vermessung des Werkstücks selbsttätig zu korrigieren und somit auch die Maßabweichungen der gefertigten Werkstücke möglichst gering zu halten.

Bei einer erfindungsgemäßen Werkzeugmaschine ist dabei beispielsweise vorgesehen, dass abhängig vom Produktionsablauf während bestimmten Phasen desselben, und gesteuert durch die Maschinensteuerung eine Vermessung des Werkstücks und eine entsprechende Korrektur des Bearbeitungsprogramms erfolgt.

Beispielsweise ist bei einer bevorzugten Variante eines Produktionsablaufs vorgesehen, dass nach Beginn der Produktion zumindest einmal eine Vermessung des Werkstücks erfolgt und gegebenenfalls nach definierten Stückzahlen von produzierten Werkstücken, wobei die definierten Stückzahlen beispielsweise keine konstanten Stückzahlen sein müssen, sondern von Messung zur Messung variieren können und somit beispielsweise so gewählt werden können, dass zu Beginn des Produktionsablaufs öfters Messungen durchgeführt werden als zu einem Zeitpunkt, zu dem davon ausgegangen werden kann, dass die Werkzeugmaschine in einem thermischen Gleichgewichtszustand arbeitet.

Es besteht aber auch die Möglichkeit, die Stückzahlen, nach welchen eine Vermessung des Werkstücks erfolgt, in Abhängigkeit von der Abweichung der gemessenen Werte von den Sollwerten festzusetzen, und insbesondere bei großen Abweichungen nach relativ geringen Stückzahlen erneut zu überprüfen, ob die Präzision erhöht wurde, oder ob die Korrektur des Bearbeitungsprogramms zur Verbesserung der Maßgenauigkeit des Werkstücks nicht ausreichend war und nochmals eine umfänglichere Korrektur erforderlich ist oder - gegebenenfalls bei der großen Abweichung - der Produktionsablauf gestoppt werden muss.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispieles einer erfindungsgemäßen Werkzeugmaschine;
- Fig. 2: eine vergrößerte Darstellung eines Bereichs in einem Arbeitsraum des ersten Ausführungsbeispiels der Werkzeugmaschine bei noch in Ruhestellung stehender Messeinheit;
- Fig. 3: eine Darstellung ähnlich Fig. 2 unmittelbar nachdem die Messeinheit ihre Ruhestellung verlassen hat und sich in Richtung einer Messstellung bewegt;
- Fig. 4: eine Darstellung ähnlich Fig. 2 bei in Messstellung stehender Messeinheit des ersten Ausführungsbeispiels;
- Fig. 5: eine Darstellung einer in Messstellung stehenden Messeinheit bei dem ersten Ausführungsbeispiel, allerdings mit entfernter Abdeckung;
- Fig. 6: eine Ansicht in Richtung des Pfeils A in Fig. 5 mit Blick auf eine Werkstückaufnahme und die in Messstellung stehende Messeinheit;
- Fig. 7: eine Draufsicht in Richtung des Pfeils B in Fig. 6, allerdings mit einer ebenfalls in einer zur Vermessung geeigneten Stellung bewegten zweiten Werkstückaufnahme;
- Fig. 8: eine schematische Darstellung der Messeinheit mit den möglichen Messungen und den der Messeinheit zugeordneten Komponenten sowie der mit einer Maschinensteuerung der erfindungsgemäßen Werkzeugmaschine zusammenwirkenden Einheiten;
- Fig. 9: eine schematische Darstellung von von einem ersten optischen Messsystem aufgenommenen Bildern eines ersten Werkstücks;
- Fig. 10: eine schematische Darstellung eines von einem zweiten optischen Messsystem aufgenommenen Bildes eines zweiten Werkstücks;
- Fig. 11: einen Schnitt durch ein in der zweiten Werkstückaufnahme aufgenommenes zweites Werkstück zur Veranschaulichung einer Vermessung von Flächen einem erfindungsgemäßen mechanischen Tastsystem;
- Fig. 12: eine Darstellung ähnlich Fig. 5 bei einer koaxial zur ersten Werkstückaufnahme stehenden zweiten Werkstückaufnahme;
- Fig. 13: eine Darstellung ähnlich Fig. 7 allerdings mit in einer dritten Messstellung stehender Messeinheit zur Vermessung eines in der zweiten Werkstückaufnahme koaxial zur ersten Werkstückaufnahme gehaltenen Werkstücks;
- Fig. 14: eine Darstellung ähnlich Fig. 2 bei einem zweiten Ausführungsbeispiel einer erfindungsgemäßen Werkzeugmaschine mit in Ruhestellung stehender Messeinheit;
- Fig. 15: eine Darstellung ähnlich Fig. 4 bei dem zweiten Ausführungsbeispiel der erfindungsgemäßen Werkzeugmaschine;
- Fig. 16: eine schematische Schnittdarstellung in Draufsicht durch das zweite Ausführungsbeispiel einer erfindungsgemäßen Messeinheit mit Darstellung eines bei dem zweiten Ausführungsbeispiel vorgesehenen Gehäuses und

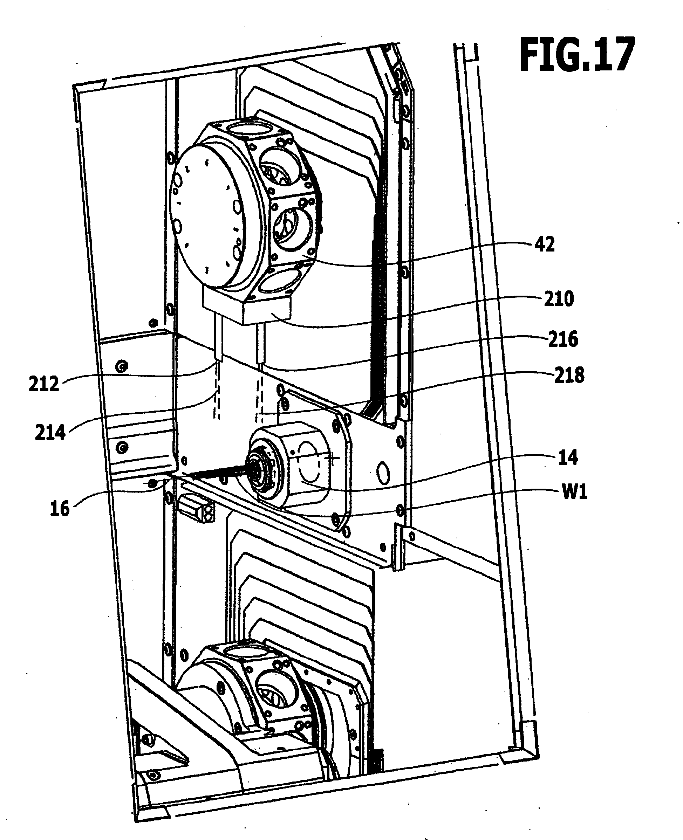

- Fig. 17: eine schematische Darstellung einer erfindungsgemäßen Werkzeugmaschine gemäß dem ersten und/oder zweiten Ausführungsbeispiel mit einer Reinigungsvorrichtung.

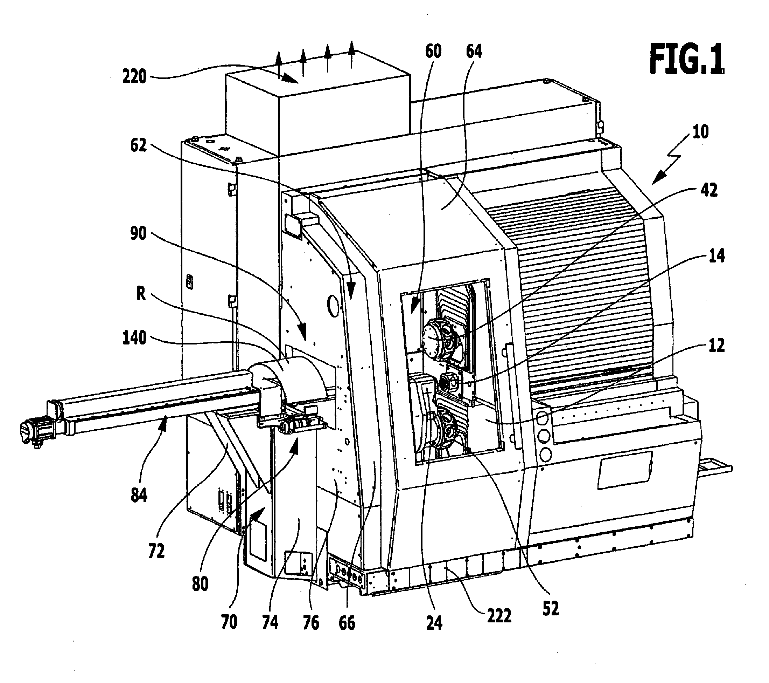

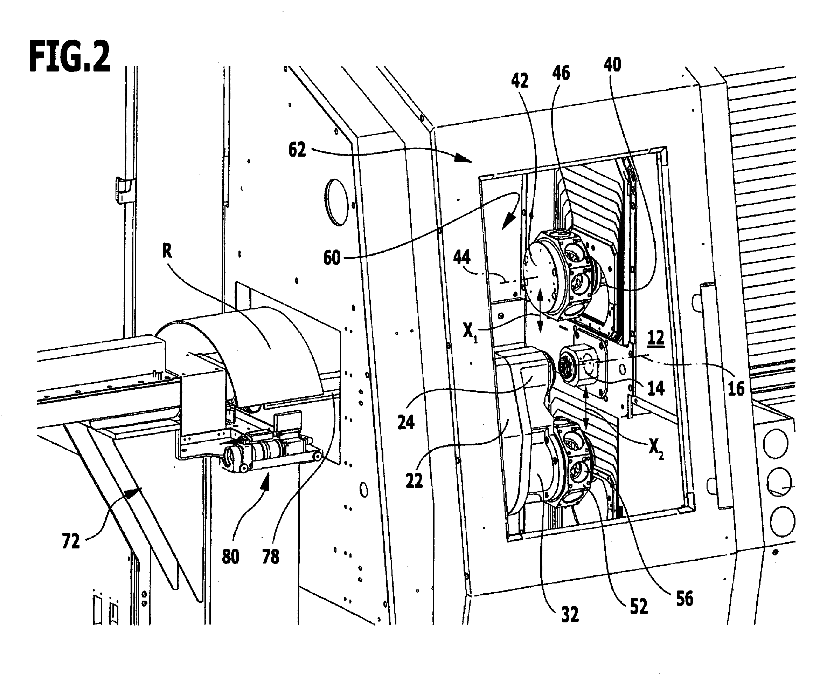

Ein Ausführungsbeispiel einer erfindungsgemäßen Werkzeugmaschine, dargestellt in Fig. 1 und 2, umfasst ein als Ganzes mit 10 bezeichnetes Maschinengehäuse, in welchem ein Maschinengestell 12 angeordnet ist.

An dem Maschinengestell 12 ist eine erste Werkstückaufnahme 14, im dargestellten Ausführungsbeispiel ausgebildet als Langdrehführungsbüchse 14, angeordnet, in welcher ein erstes Werkstück W1 zur Bearbeitung aufnehmbar ist und außerdem um eine erste Spindelachse 16 drehbar antreibbar ist.

Ferner ist an dem Maschinengestell 12 als zweite Werkstückaufnahme 24 beispielsweise eine Gegenspindel vorgesehen, die an einem Arm 22 und durch diesen quer zur ersten Spindelachse 16 bewegbar ist und in welcher ebenfalls ein Werkstück W2 aufnehmbar und um eine zweite Spindelachse 26 drehend antreibbar ist.

Die als Gegenspindel ausgebildete zweite Werkstückaufnahme 24 ist hierzu vorzugsweise mit dem Arm 22 um eine Schwenkachse 28 schwenkbar gelagert und der Arm 22 sitzt ferner mit einem Schwenklager 32 auf einem Schlitten 30, der in einer radialen Richtung zur ersten Spindelachse 16, insbesondere in einer sogenannten X-Richtung, relativ zur ersten Werkstückaufnahme 14 bewegbar ist.

Zur Bearbeitung der Werkstücke in der ersten Werkstückaufnahme 14 ist, wie in Fig. 1 und 2 dargestellt, auf einem Schlitten 40 ein erster Werkzeugträger 42 vorgesehen, wobei der erste Werkzeugträger 42 relativ zur ersten Werkstückaufnahme 14 in einer zur ersten Spindelachse 16 radialen Richtung, das heißt ebenfalls in einer sogenannten X-Richtung bewegbar ist, welche in diesem Fall als X1-Richtung bezeichnet ist.

Der Werkzeugträger 42 ist beispielsweise als Werkzeugrevolver ausgebildet, der eine Vielzahl von um eine Revolverachse 44 herum angeordneten Werkzeugaufnahmen 46 aufweist, so dass durch Drehen des Werkzeugrevolvers 42 um die Revolverachse 44 die in den unterschiedlichen Werkzeugaufnahmen 46 vorhandenen Werkzeuge an einem in der ersten Werkstückaufnahme 14 gehaltenen Werkstück in Einsatz gebracht werden können.

Ferner sitzt auf dem Schlitten 30 ein als Werkzeugrevolver ausgebildeter zweiter Werkzeugträger 52, welcher ebenfalls um eine Revolverachse 54 drehbar ist und eine Vielzahl von Werkzeugaufnahmen 56 aufweist, in welche Werkzeuge einsetzbar sind, die ebenfalls durch Drehung des Werkzeugträgers 52 um die Revolverachse 54 an einem in der ersten Werkstückaufnahme 14 aufgenommenen Werkstück in Einsatz bringbar sind.

Vorzugsweise fällt die Revolverachse 54 mit der Schwenkachse 28 zusammen, um welche die zweite Werkstückaufnahme 24 schwenkbar ist, und außerdem sind damit der zweite Werkzeugträger 52 und die zweite Werkstückaufnahme 24 radial zur ersten Spindelachse 16 und somit in einer X2-Richtung bewegbar.

Die erste Werkstückaufnahme 14, die zweite Werkstückaufnahme 24, der erste Werkzeugträger 42 und der zweite Werkzeugträger 52 liegen alle in einem als Ganzes mit 60 bezeichneten Arbeitsraum der Werkzeugmaschine, der von einem Arbeitsraumgehäuse 62 umschlossen ist, welches Teil des Maschinengehäuses 10 ist. Das Arbeitsraumgehäuse 62 ist vorzugsweise allseitig geschlossen und beispielsweise durch eine Tür 64 zugänglich die an einer Bedienseite 66 des Maschinengehäuses 10 angeordnet ist und beispielsweise als Schiebetür ausgebildet ist.

Ferner ist die Tür 64 vorzugsweise so angeordnet, dass sie sich ungefähr parallel zu den Spindelachsen 14 bzw. 26 erstreckt, so dass nach Öffnen der Tür 64 ein quer zu den Spindelachsen 16 und 26 verlaufender Zugriff auf sämtliche Elemente im Arbeitsraum möglich ist, um die üblichen Einrichtarbeiten durchzuführen.

Zur optischen Vermessung von im Arbeitsraum 60 bearbeiteten Werkstücken W ist eine als Ganzes mit 70 bezeichnete Messeinrichtung vorgesehen, welche ein Grundgestell 72 aufweist, das seinerseits mit einer Basis 74 an dem Maschinengestell 12 oder dem Maschinengehäuse 10 gehalten ist, beispielsweise im Bereich einer der ersten Werkstückaufnahme 14 gegenüberliegend angeordneten Seitenwand 76 des Arbeitsraumgehäuses 62.

Ferner umfasst da Grundgestell 72 eine in den Arbeitsraum 60 hinein verlaufende Führungsbahn 78, an welcher eine als Ganzes mit 80 bezeichnete Messeinheit längs einer Führungsrichtung 82 bewegbar ist.

Hierzu ist an dem Grundgestell 72 eine als Ganzes mit 84 bezeichnete Vorschubeinheit angeordnet, die beispielsweise eine Vorschubspindel aufweist, um die Messeinheit 80 längs der Führungsbahn 78 in der Führungsrichtung 82 zu bewegen.

Die Messeinheit 80 steht in einer in Fig. 1 und 2 dargestellten Ruhestellung R, in welcher die Messeinheit 80 außerhalb der Werkzeugmaschine in einem Außenraum 90 angeordnet ist, welcher sich auf einer dem Arbeitsraum 60 abgewandten Seite der Seitenwand 76 befindet.

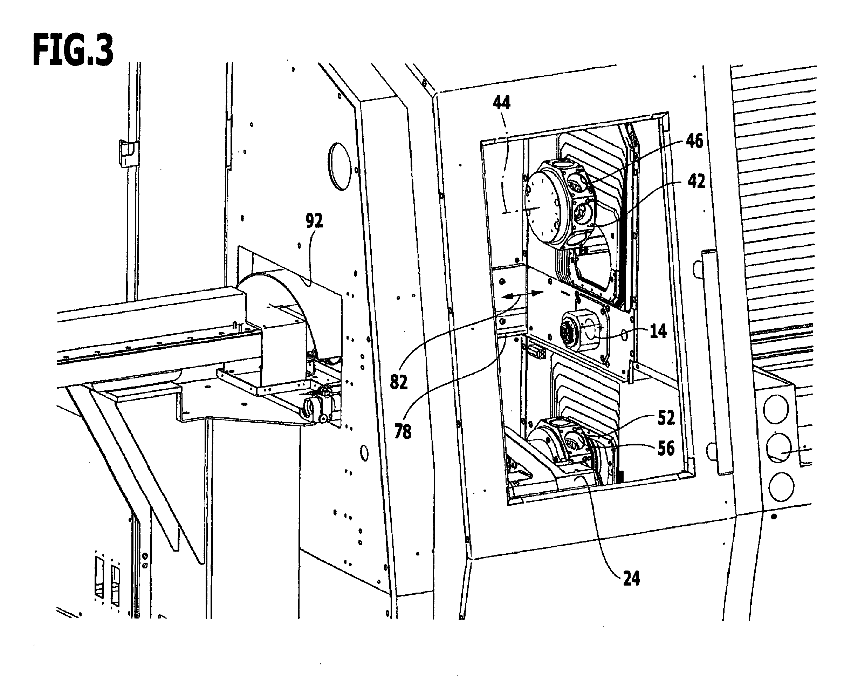

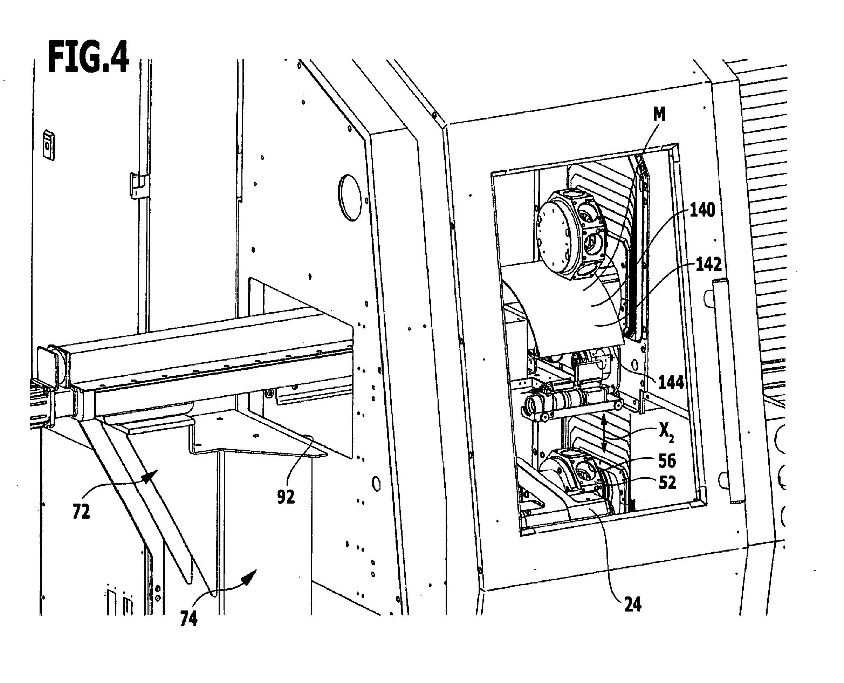

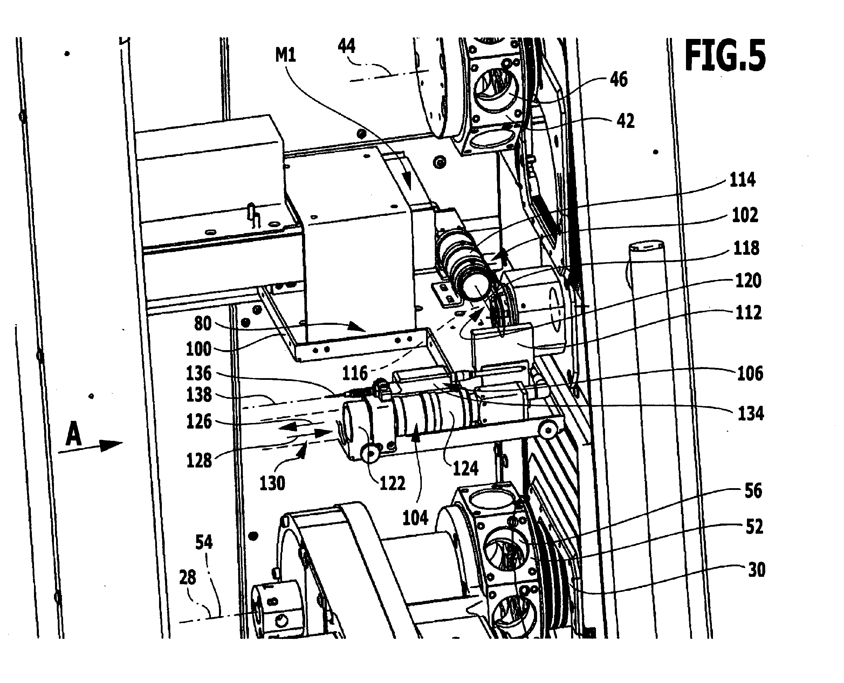

Ausgehend von dieser Ruhestellung R ist die Messeinheit 80 durch einen Durchbruch 92 in der Seitenwand 76 hindurch in den Arbeitsraum 60 bewegbar, wie in Fig. 3 dargestellt, und zwar bis zu einer Messstellung M, welche in Fig. 4 und 5 dargestellt ist und welche beispielsweise der ersten Werkstückaufnahme 14 zugeordnet ist.

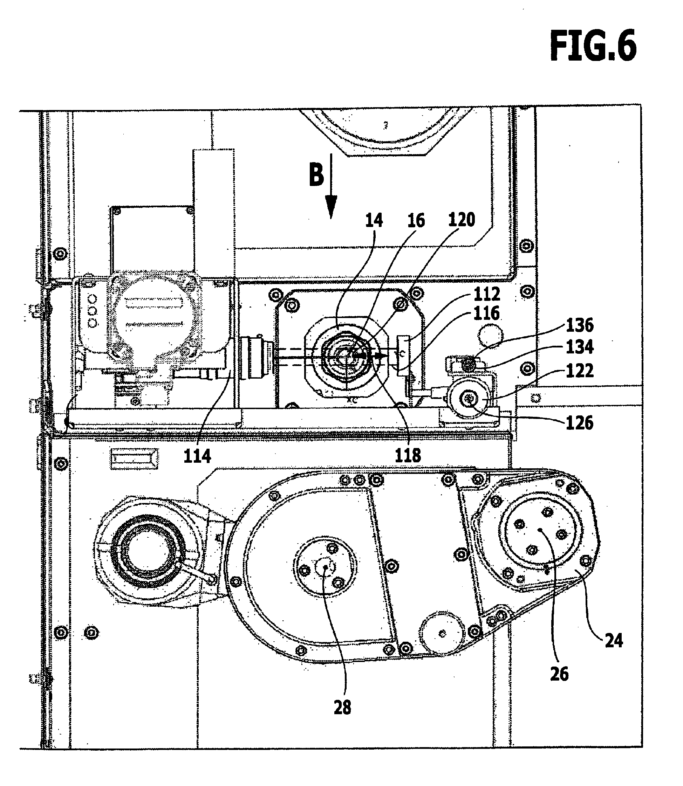

Um die Messeinheit 80 von der Ruhestellung R in die Messstellung M zu bewegen, wird die zweite Werkstückaufnahme 24 in Form der Gegenspindel um die Schwenkachse 28, wie in Fig. 5 und 6 dargestellt, so weit verschwenkt, dass die Messeinheit 80, kollisionsfrei in die Messstellung verschoben werden kann, die der ersten Werkstückaufnahme 14 zugeordnet ist.

Vorzugsweise steht dabei die zweite Werkstückaufnahme durch Verschwenken um die Schwenkachse 28 und Verfahren des Schlittens 30 in der in Fig. 5 und 6 dargestellten Einfahrstellung.

Die Messeinheit 90 umfasst, wie in Fig. 5 dargestellt, einen Träger 100, an welchem beispielsweise ein erstes optisches Messsystem 102 und ein zweites optisches Messsystem 104 sowie ein mechanisches Tastsystem 106 vorgesehen sind, wobei die optischen Messsysteme 102 und 104 sowie das mechanische Tastsystem 106 je nach Messaufgabe angeordnet und ausgebildet sein können.

Bei dem dargestellten Ausführungsbeispiel ist beispielsweise das erste optische Messsystem 102 als Durchlichtmesssystem ausgebildet, welches eine flächenhafte Strahlungsquelle 112, vorzugsweise eine im sichtbaren Spektralbereich arbeitende Lichtquelle, sowie ein Bildaufnahmesystem 114 aufweist, die auf gegenüberliegenden Seiten eines ersten Messraums 120 angeordnet sind, wobei der erste Messraum 120 durch die räumliche Ausdehnung des von der Strahlungsquelle 112 erzeugten und von dem Bildaufnahmesystem 114 erfassten Strahlungsfeldes, das sich zwischen der Strahlungsquelle 112 und dem Bildaufnahmesystem 114 erstreckt, hinsichtlich seiner Dimensionen räumlich definiert ist.

Der erste Messraum 120 ist somit ein örtlich relativ zum Träger 100 räumlich fest angeordneter Raum, da auf dem Träger 100 sowohl die Strahlungsquelle 112 als auch das Bildaufnahmesystem 114 fest montiert sind, und somit mit dem Träger 100 mitbewegbar.

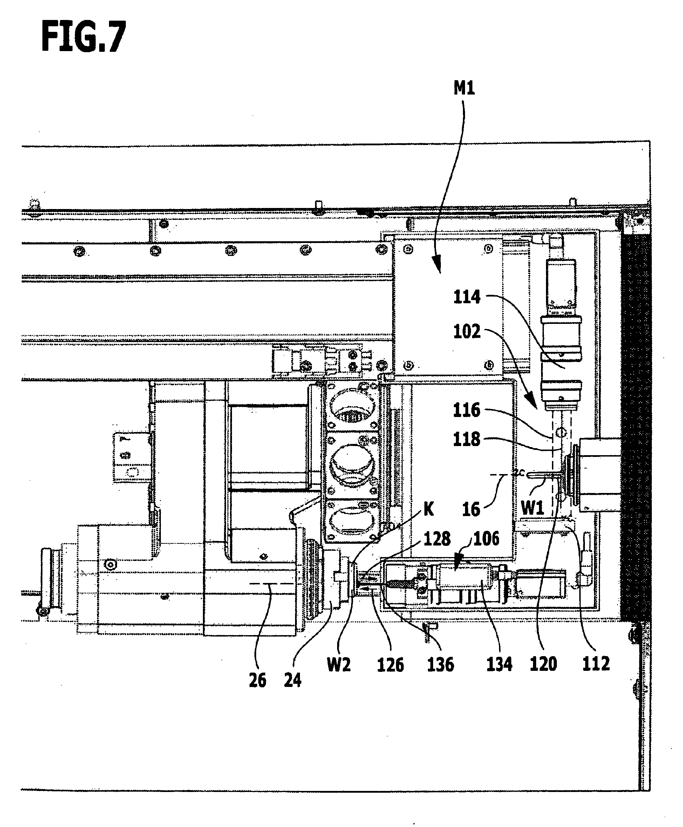

Beispielsweise steht in einer Messstellung M1, dargestellt in Fig. 5 und 7 der erste Messraum 120 so, dass sich in diesen ein in der ersten Werkstückaufnahme 14 angeordnetes Werkstück W1 hinein erstreckt, wobei sich das Strahlungsfeld 116 in einer Ausbreitungsrichtung 118 erstreckt, die quer, vorzugsweise senkrecht zur ersten Spindelachse 16 verläuft.

Bei dem dargestellten Ausführungsbeispiel ist die Messeinrichtung 70, insbesondere mit dem Träger 100 und auch die Führungsbahn 78 so relativ zur ersten Werkstückaufnahme 14 angeordnet, dass lediglich durch lineare Verschiebung der Messeinheit 80 von der Ruhestellung R in die Messstellung M das in der ersten Werkstückspindelaufnahme 14 gehaltene Werkstück W in den ersten Messraum 110 zumindest mit einem Teilbereich hineinragt und mit diesem Teilbereich im Durchlichtverfahren von dem ersten optischen Messsystem 102 vermessen werden kann.

Vorzugsweise verläuft die Führungsbahn 78 in horizontaler Richtung oder maximal mit einer Neigung von ± 30° zu dieser um keinen Einfluss der auf dem Träger 100 wirkenden Schwerkräfte auf die Positionsgenauigkeit in der Führungsrichtung 82 zu haben.

Hierzu ist es lediglich erforderlich, die Position der Messeinheit 80 längs der Führungsbahn 78 in der Messstellung M exakt festzulegen.

Dies erfolgt vorzugsweise dadurch, dass die Vorschubeinheit 84 als steuerbare Linearachse, vorzugsweise als steuerbare NC-Achse, ausgebildet.

Das zweite optische Messsystem 104 ist, wie in Fig. 5 und 7 dargestellt, bei dem Ausführungsbeispiel als Auflichtmesssystem ausgebildet, welches beispielsweise mit einer Strahlungsquelle 122, die ebenfalls vorzugsweise Licht im sichtbaren Spektralbereich erzeugt, und ein Bildaufnahmesystem 124 aufweist, wobei die Strahlungsquelle 122 ein Strahlungsfeld 126 erzeugt, und das Bildaufnahmesystem 124 ein durch Reflexion des Strahlungsfelds 126 reflektiertes Strahlungsfeld 128 erfasst, sofern ein zu vermessendes Objekt in einem von dem Strahlungsfeld 126 durchsetzten zweiten Messraum 130 steht.

Vorzugsweise sind dabei das Strahlungsfeld 126 und das reflektierte Strahlungsfeld 128 so ausgerichtet, dass diese sich parallel zu der ersten Spindelachse 16 und/oder parallel zu der zweiten Spindelachse 26 parallel zur Schwenkachse 28 ausbreiten.

Das mechanische Tastsystem 106 umfasst einen elektronischen Aufnehmer 134 sowie eine Tastnadel 136, die in einer Tastrichtung 138 relativ zum elektronischen Aufnehmer 134 verschiebbar ist, wobei die Tastrichtung 138 vorzugsweise ebenfalls parallel zur ersten Spindelachse 16, und/oder parallel zur zweiten Spindelachse 26 und/oder parallel zur Schwenkachse 28 verläuft.

Zum Schutz der optischen Messsysteme 102 und 104 sowie des mechanischen Tastsystems 106 umfasst die Messeinheit 80, wie in den Fig. 1 bis 4 dargestellt, eine Abdeckung 140, welche die optischen Messsysteme 102 und 104 mit den Messräumen 120 und 130 sowie auch das mechanische Tastsystem 106 übergreift und einen Tropfschutz bildet, welcher diese gegen herabtropfende Medien im Arbeitsraum 60 schützt, insbesondere gegen herabtropfenden Kühlschmierstoff oder herabtropfendes Reinigungsmedium. Vorzugsweise ist dabei die Abdeckung 140 mit einer gewölbten Oberseite 142 versehen, die herabtropfendes Medium zu seitlichen Abtropfkanten 144 ableitet, die so angeordnet sind, dass das von den Abtropfkanten 144 abtropfende Medium weder die optischen Messsysteme 102 und 104 noch das mechanische Tastsystem 106 trifft.

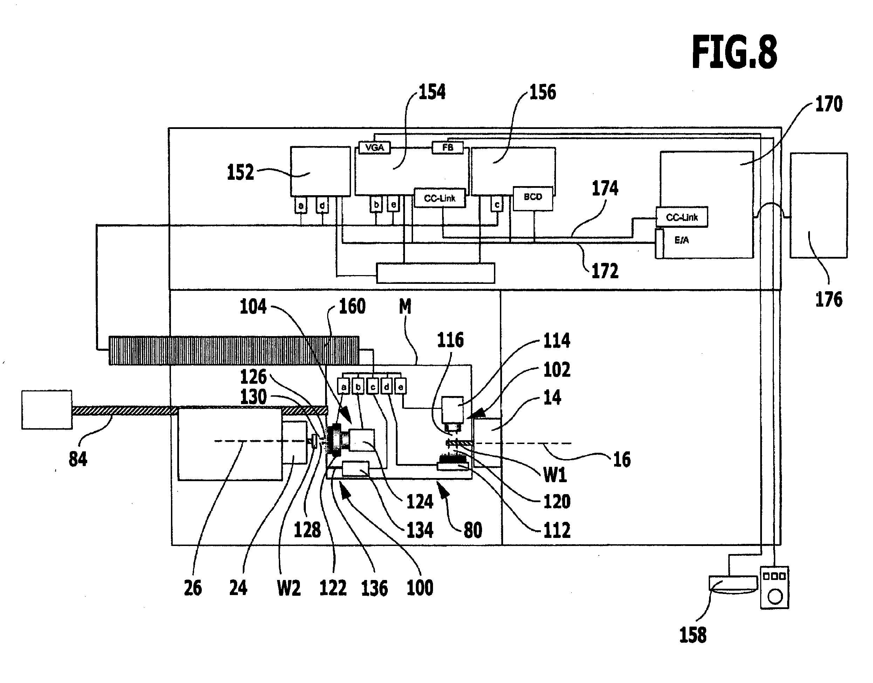

Die einzelnen optischen Messsysteme 102 und 104 sowie das mechanische Tastsystem 106 sind nochmals schematisch in Fig. 8 auf dem Träger 100 dargestellt und zwar bei in Messstellung M stehender Messeinheit 80, wobei zusätzlich die Werkstückaufnahmen 14 und 24 sowie Werkstücke W1 und W2 ebenfalls eingezeichnet sind.

Ferner ist auch die Ansteuerung und Verschaltung der optischen Messsysteme 102 und 104 sowie des mechanischen Tastsystems 106 dargestellt.

Für die Versorgung der Strahlungsquellen 112 und 122 ist eine Beleuchtungssteuerung 152 vorgesehen, und die Bildaufnahmesysteme 114 und 124 sind mit einer Bilderfassungseinheit 154 gekoppelt.

Außerdem ist der elektronische Aufnehmer 134 der Tastnadel 136 mit einer Tasterfassungseinheit 156 gekoppelt.

Die Beleuchtungssteuerung 152, die Bilderfassungseinheit 154 und die Tasterfassungseinheit 156 sind außerhalb des Arbeitsraums 60 angeordnet und insbesondere sind die von der Bilderfassungseinheit 154 erfassbaren Bilder auf einem Bildschirm 158 für eine Bedienungsperson darstellbar, so dass insbesondere dadurch ein Einrichten der Werkzeugmaschine erleichtert wird.

Die Leitungen zwischen der Beleuchtungssteuerung 152 und den Lichtquellen 112 und 122, der Bilderfassungseinheit 154 und den Bildaufnahmesystemen 114 und 124 sowie der Tasterfassungseinheit 156 und dem elektronischen Aufnehmer 134 laufen über eine Schleppleitung 160 zu der bewegbaren Messeinheit 80.

Ferner sind die Beleuchtungssteuerung 152, die Bilderfassungseinheit 154 und die Tasterfassungseinheit 156 durch eine als Ganzes mit 170 bezeichnete und ebenfalls außerhalb des Arbeitsraums 60 angeordnete Maschinensteuerung 170 über eine Verbindung 172 ansteuerbar und außerdem ist zwischen der Bilderfassungseinheit 154 und der Maschinensteuerung 170 noch eine Bild-übertragungsleitung 174 vorgesehen, um die Bilddaten möglichst schnell und effizient von der Bilderfassungseinheit auf die Maschinensteuerung 170 zu übertragen.

Dabei ist die Maschinensteuerung 170 in der Lage, mit speziellen Bildauswerteprogrammen die von den Bildaufnahmesystemen 114 und 124 aufgenommenen und von der Bilderfassungseinheit 154 erfassten Abbildungen der Werkstücke W1 und/oder W2 mit speziellen Bildauswerteprogrammen auszuwerten, insbesondere Kontur und Dimensionsbestimmungen maßgenau vorzunehmen.

Eine Darstellung der erfassten Bilder ist aber auch auf einem Bildschirm 176 der Maschinensteuerung 170 möglich und vorzugsweise werden auch die Ergebnisse, die die Bildauswerteprogramme liefern auf dem Bildschirm 176 dargestellt.

Eine weitere vorteilhafte Option sieht vor, auf dem Bildschirm 176 bei Darstellung der erfassten Bilder durch interaktive Einwirkung, beispielsweise Angabe der zu vermessenden Bereiche, die Auswertung der Bilder vorzunehmen oder für weitere nachfolgende Auswertevorgänge interaktiv zu programmieren.

Alternativ dazu ist für die Bildauswertung ein besonderer Rechner vorgesehen, auf welchem die Bildauswerteprogramme laufen, wobei die Ergebnisse der Maschinensteuerung 170 übermittelt werden.

Bei der erfindungsgemäßen Werkzeugmaschine können nun bei in Messstellung M stehender Messeinheit 80 die verschiedensten Messungen und Auswertungen vorgenommen werden.

Wie in Fig. 5 und 7 dargestellt, ist in einer ersten Messstellung M1 die Messeinheit 80 in eine sogenannte Endstellung bewegt, in welcher das Strahlungsfeld 116 im Durchlichtverfahren die Abmessungen des Werkstücks W1 erfassen kann, wobei das im Durchlichtverfahren von dem Bildaufnahmesystem 114 erfasste Schattenbild einem Schnitt durch das Werkstück W1 in einer senkrecht zur Ausbreitungsrichtung 118 des Strahlungsfeldes 116 durch die Spindelachse 16 verlaufenden Ebene entspricht.

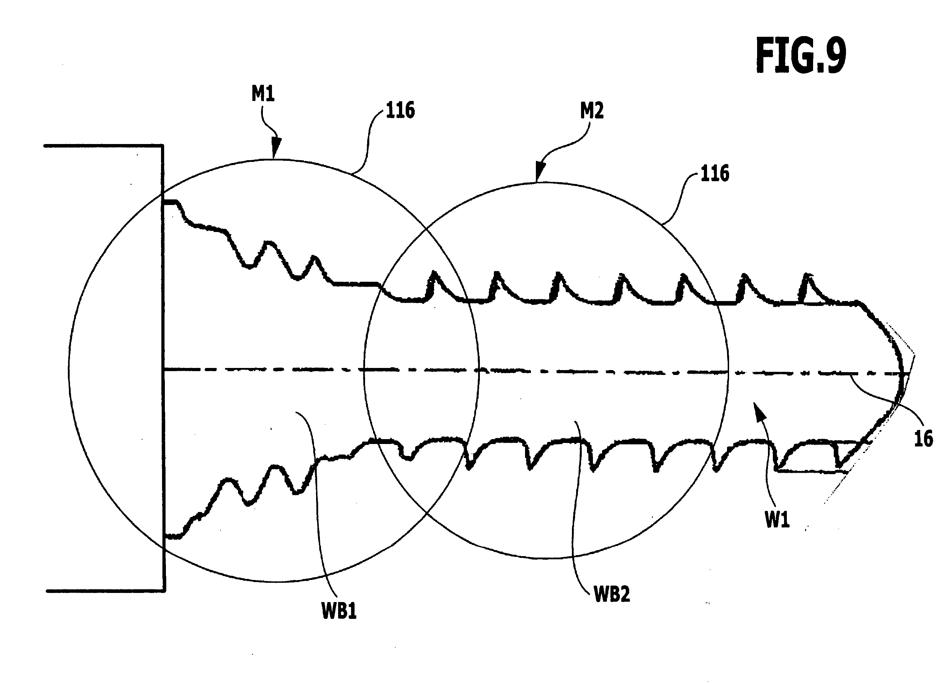

Ist das Werkstück W1 beispielsweise ein sich parallel zur ersten Spindelachse 16 erstreckendes langgezogenes Werkstück, so entspricht das Schattenbild einem Längsschnitt durch das Werkstück W1, das beispielsweise in Fig. 9 dargestellt ist.

Erfasst dabei das Strahlungsfeld 116 nicht das Werkstück W1 über seine gesamte Länge, so kann durch Bewegen der Messeinheit 80 mittels der Vorschubeinheit 84 das Strahlungsfeld 116 des ersten optischen Messsystems 102 in eine Messstellung M2 gebracht werden, in welcher das Strahlungsfeld 116 so angeordnet ist, dass es einen Werkstückbereich WB2 erfasst, der mit dem vom Strahlungsfeld 116 in der Messstellung M1 erfassten Werkstückbereich W1 noch überlappt, allerdings zusätzlich den vom Strahlungsfeld 116 in der Messstellung M1 noch nicht erfassten Bereich des Werkstücks M1 im Durchlichtverfahren vermisst.

Hierbei ist es besonders vorteilhaft, dass die Vorschubeinheit 84 als Linearachse ausgebildet ist, die von der Maschinensteuerung 170 exakt steuerbar ist, so dass sich die Positionen des Strahlungsfeldes 116 in der Messstellung M1 und in der Messstellung M2 exakt relativ zueinander von der Maschinensteuerung 170 erfassen lassen und somit dann auch die von der Bilderfassungseinheit 154 erfassten und der Maschinensteuerung 170 übermittelten Schattenbilder der Werkstückbereiche WB1 und WB2 zusammensetzen lassen, so dass in der Maschinensteuerung 170 ein Datensatz vorliegt, welcher aus den beiden, Schattenbildern in der Messstellung M1 und in der Messstellung M2 zusammengesetzt ist und somit Auskunft über die Kontur des Werkstücks W1 in mehreren Werkstückbereichen WB gibt.

Die Vermessung des Werkstücks W1 mittels des ersten optischen Messsystems 102 kann dabei bei in der Einfahrstellung stehender zweiter Werkstückaufnahme 24 erfolgen, oder es besteht die Möglichkeit, wie in Fig. 7 dargestellt, gleichzeitig mit der Vermessung des Werkstücks W1, das Werkstück W2, welches in der zweiten Werkstückaufnahme 24, das heißt der Gegenspindel, aufgenommen ist, zu vermessen, und zwar mit dem zweiten optischen Messsystem 104.

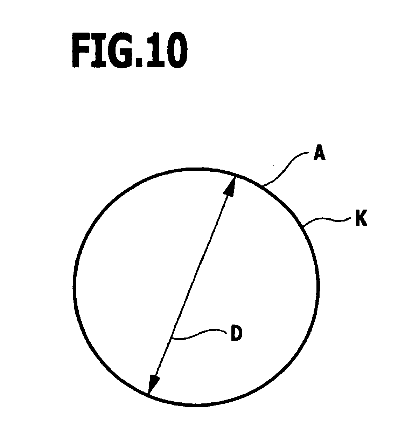

Hierzu ist die zweite Werkstückaufnahme 24 nach Bewegen der Messeinheit 80 in die Messstellung M von der Einfahrstellung in eine Vermessungsstellung bewegbar, die schematisch in Fig. 8 dargestellt ist, wobei abweichend von der schematischen Darstellung in Fig. 8 in der tatsächlichen Vermessungsstellung der zweiten Werkstückaufnahme 24 diese, wie in Fig. 7 dargestellt, in einer Stellung steht, in welcher das Werkstück W2, beispielsweise ein Kopfbereich K des Werkstücks W2, durch das Strahlungsfeld 126 der Lichtquelle 122 beaufschlagbar ist und diese in Abhängigkeit von seiner Form als Strahlungsfeld 128 zum Bildaufnahmesystem 124 zurückreflektiert, so dass das Bildaufnahmesystem 124, wie in Fig. 10 dargestellt, ein im Auflichtverfahren aufgenommenes Bild des Kopfbereichs K zeigt, aus welchem sich eine Außenkontur A desselben, sowie ein Durchmesser D desselben oder andere Maße auswerten lassen. Auch diese Auswertung des im Auflichtverfahren aufgenommenen Bildes des Kopfbereichs K erfolgt in der Maschinensteuerung 170 mit hierzu geeigneten Programmen.

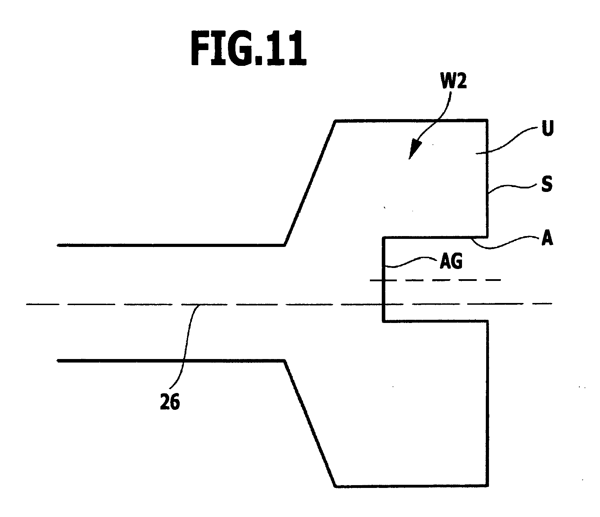

Darüber hinaus kann die zweite Werkstückaufnahme 24 auch so weit verschoben werden, dass das Werkstück W2 beispielsweise fluchtend zu der Tastnadel 136 ausgerichtet ist und diese kann dabei in Richtung des Kopfbereichs K des Werkstücks W2 bewegt werden, entweder um, wie in Fig. 11 dargestellt, eine Lage der Stirnfläche S des Kopfbereichs K zu erfassen oder eine Lage eines Ausnehmungsgrundes AG einer im Kopfbereich vorgesehenen Ausnehmung A, wie ebenfalls in Fig. 11 dargestellt.

Dabei kann entweder die zweite Werkstückaufnahme 24 in Richtung des mechanischen Tastsystems 106 gesteuert durch die Maschinensteuerung 170 bewegt werden, wobei hierdurch für die Maschinensteuerung 170 die Lage des Werkstücks W2 aufgrund der Steuerdaten bekannt ist, oder es besteht die Möglichkeit, die Messeinheit 80 gesteuert durch die als Linearachse ausgebildete Vorschubeinheit 84 relativ zum feststehenden Werkstück W2 zu bewegen und dadurch die Tastnadel 136 entweder mit der Stirnfläche S oder dem Ausnehmungsgrund AG der Ausnehmung A in Berührung zu bringen und in der Tasterfassungseinheit 156 ein Positionssignal auszulösen, welches von der Tasterfassungseinheit 156 der Maschinensteuerung 170 übermittelt wird, die dieses dann der aktuellen Position der Tastnadel 136 zuordnet.

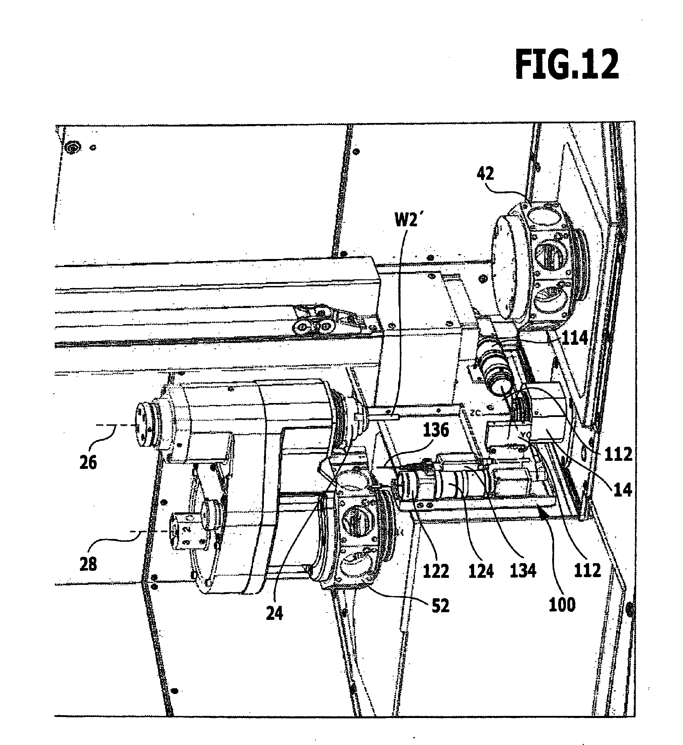

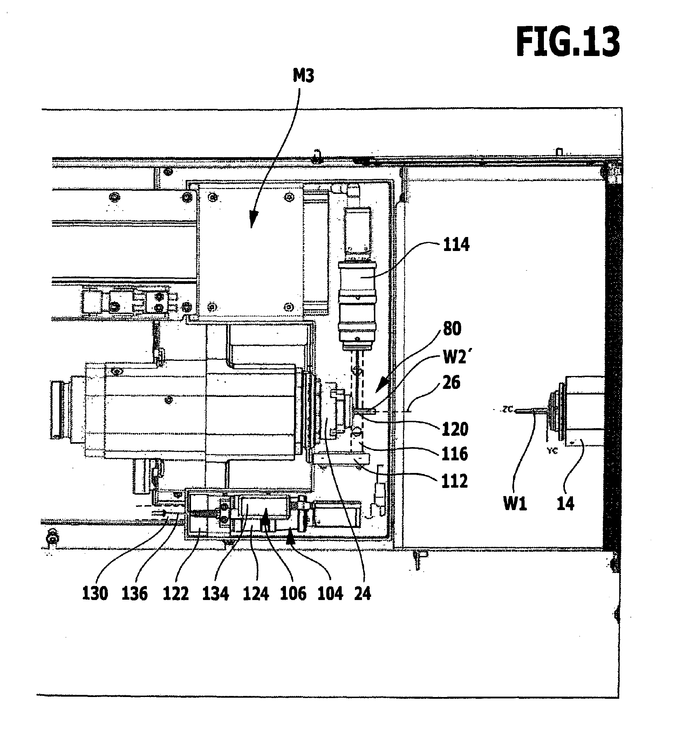

Ferner kann aber auch, wie in Fig. 12 dargestellt, die zweite Werkstückaufnahme 24 koaxial zur ersten Werkstückaufnahme 14 angeordnet werden, und ein in der zweiten Werkstückaufnahme aufgenommenes Werkstück W2' von dem ersten optischen Messsystem 102 im Durchlichtverfahren vermessen werden, in gleicher Weise wie dies im Zusammenhang mit der Vermessung eines Werkstücks W1 in der ersten Werkstückaufnahme 14 beschrieben wurde, wobei hierzu die Messeinheit 80 aus der Messstellung M1 oder M2 heraus von der ersten Werkstückaufnahme 14 weg in Richtung der zweiten Werkstückaufnahme 24 durch die Vorschubeinheit 84, beispielsweise in eine zeichnerisch in Fig. 13 dargstellte Messstellung M3, verfahren werden muss, in welcher das in der zweiten Werkstückaufnahmeeinheit 24 angeordnete Werkstück W2 in dem ersten Messraum 120 zumindest teilweise liegt.

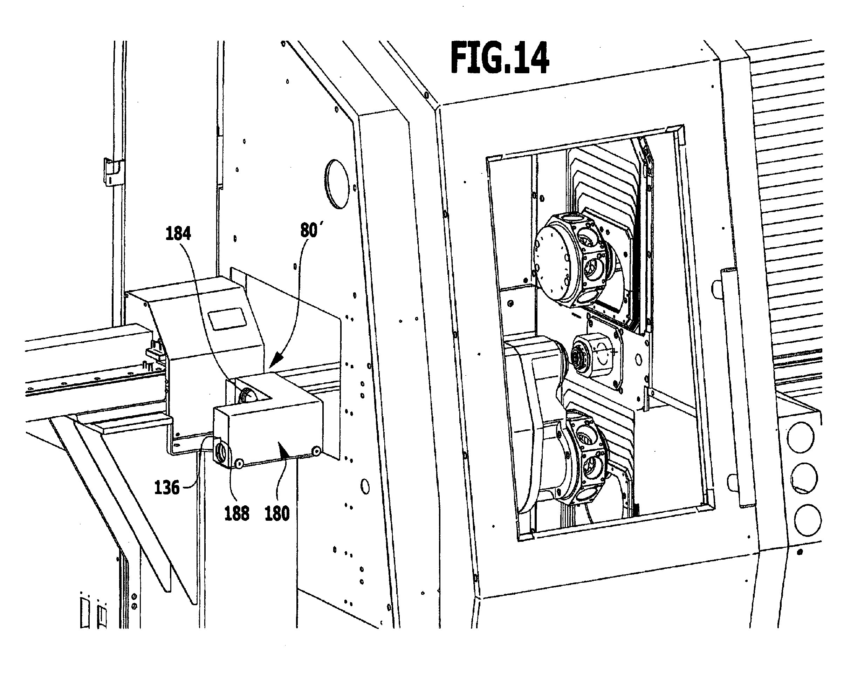

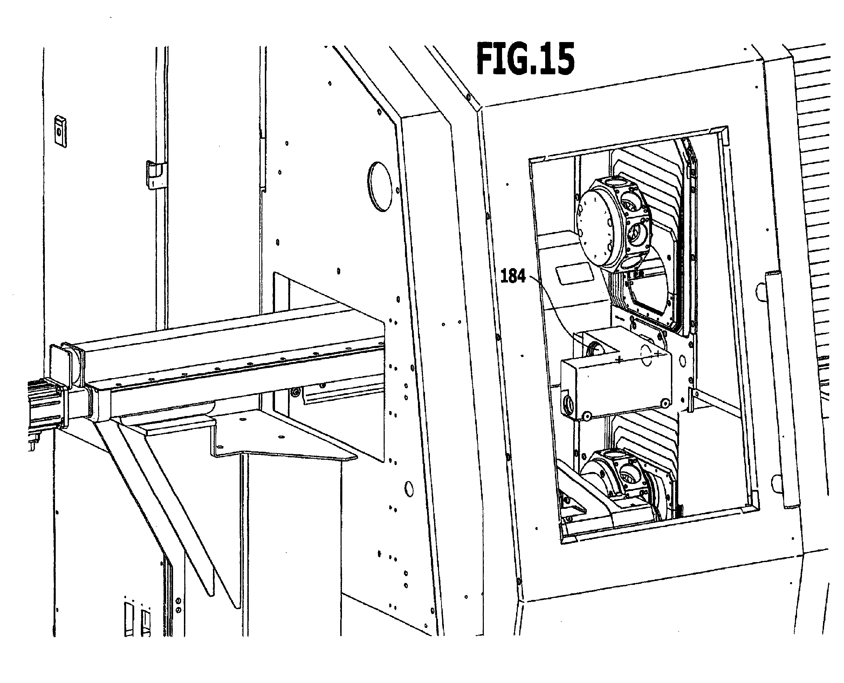

Bei einem zweiten Ausführungsbeispiel einer erfindungsgemäßen Werkzeugmaschine, dargestellt in Fig. 14, ist die Messeinheit 80' in gleicher Weise wie beim ersten Ausführungsbeispiel mit dem ersten optischen Messsystem 102, dem zweiten optischen Messsystem 104 und dem mechanischen Tastsystem 106 versehen, allerdings sind diese, wie sich aus Fig. 14 und 15 ergibt, in einem auch als Abdeckung 140 dienenden Gehäuse 180 angeordnet, welches nicht nur einen Schutz gegen herabtropfende Medien bildet, wie die Abdeckung 140, sondern zusammen mit dem Träger 100 einen allseitigen umfassenden Schutz für die optischen Messsysteme 102 und 104 sowie das mechanische Tastsystem 106 bildet, mit Ausnahme von Zutrittsöffnungen 182, 184, 186 und einer Austrittsöffnung 188.

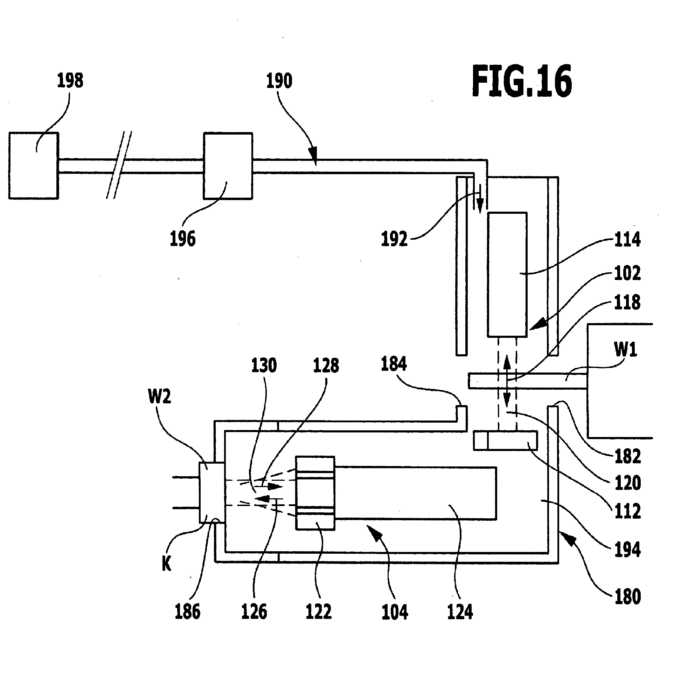

Hierzu ist das Gehäuse 180 so ausgebildet, dass es, wie in Fig. 16 dargestellt, dem ersten Messraum 120 zugeordnete Zutrittsöffnungen 182 und 184 aufweist, die auf gegenüberliegenden Seiten des ersten Messraums 120 angeordnet sind und es ermöglichen, entweder ein Werkzeug W1 über die Zutrittsöffnung 182 des Gehäuses 180 in den ersten Messraum 120 einzuführen oder das Werkstück W2 über die Zutrittsöffnung 184.

Vorzugsweise sind die Zutrittsöffnungen 182 und 184 zu dem Gehäuse 180 ungefähr gleich groß definiert.

Darüber hinaus ist das Gehäuse 180 noch mit einer Zutrittsöffnung 186 versehen, die es erlaubt, das Werkstück W2 beispielsweise mit dem Kopfbereich K in das Gehäuse 180 so weit einzuführen, dass der Kopfbereich K in dem zweiten Messraum 130 liegt und dort durch das zweite optische Messsystem 104 vermessen werden kann.

Ferner umschließt das Gehäuse 180 auch noch das mechanische Tastsystem 106 und weist lediglich eine Austrittsöffnung 188 auf, durch welche die Tastnadel 136 aus dem Gehäuse 180 herausragt, so dass die Tastnadel 136 außerhalb des Gehäuses 180 das Werkstück, beispielsweise das Werkstück W2 in seinem Kopfbereich K abtasten kann, in gleicher Weise wie dies im Zusammenhang mit dem ersten Ausführungsbeispiel beschrieben wurde.

Ein derartiges Gehäuse 180 eröffnet nun die Möglichkeit, wie in Fig. 16 schematisch dargestellt, über eine Zufuhreinrichtung 190 ein gasförmiges Medium 192 einem Innenraum 194 des Gehäuses 180 zuzuführen, beispielsweise in diesen einzublasen, so dass das gasförmige Medium sich in dem Innenraum 194 des Gehäuses 180 verteilt und dabei durch die Zutrittsöffnungen 182 und 184 oder 186 oder die Austrittsöffnung 188 wiederum aus dem Gehäuse 180 austritt, woraus der Vorteil resultiert, dass damit keine Verschmutzungen bedingenden Medien in das Gehäuse 180 durch die Zutrittsöffnungen 182, 184, 186 oder die Austrittsöffnung 188 eintreten können, so dass dadurch der Innenraum 194 des Gehäuses 180 von in das Gehäuse 180 eindringendem Schmutz freigehalten werden kann.

Vorzugsweise ist das Medium 192, welches über die Zufuhreinrichtung 190 zugeführt wird, durch einen Filter 196 gefiltert und wird durch eine Ansaugeinheit 198 entweder in der Umgebung der Werkzeugmaschine oder außerhalb eines die Werkzeugmaschine aufnehmenden Gebäudes angesaugt, um somit den Innenraum 194 des Gehäuses 180 stets verschmutzungsfrei mit dem gasförmigen Medium 192, im einfachsten Fall angesaugter und gefilterter Luft, zu spülen und vor Eindringenden Medien zu schützen.

Derartige eindringende Medien können beispielsweise Tropfen oder Tröpfchen oder ein Aerosolgemisch von Kühlschmierstoff oder auch Reinigungsmedium sein, welches im Arbeitsraum 60 zur Bearbeitung der Werkstücke W1 und W2 verwendet wird.

Das mit der Zufuhreinrichtung 190 zugeführte Medium 192 kann auch dazu dienen, die Messeinheit 80, insbesondere die optischen Messsysteme 102 und 104 sowie das mechanische Tastsystem 106 auf einer definierten Temperatur zu halten, um somit Messfehler, die auf variierenden Temperaturen der Messeinheit 80 basieren zu vermeiden.

Das vorstehend beschriebene hochpräzise Vermessen der Werkstücke W erfolgt bei bislang bekannten Produktionsabläufen von Produktionsanlagen in separaten Messräumen unter gleichmäßig temperierten Bedingungen mit speziell für das Messen gereinigten Werkstücken.

Um beispielsweise das in der ersten Werkstückaufnahme gehaltene Werkstück W1 reinigen zu können, ist der erste Werkzeugträger 42 mit einem in einer der Werkzeugaufnahmen 46, sitzenden Reinigungsvorrichtung 210 versehen, die einerseits eine Austrittsöffnung 212 für einen Reinigungsstrahl 214 eines Reinigungsmediums aufweist, welcher gezielt auf das Werkstück W1 gerichtet werden kann, um das Werkstück W1 auf seinen bearbeiteten Seiten von Spänen oder anderen Verschmutzungen, die während eines Bearbeitungsvorgangs auftreten, zu reinigen.

Ferner umfasst die Reinigungsvorrichtung 210 noch eine Austrittsöffnung 216 für einen Blasstrahl 218, der als gezielter Strahl eines gasförmigen Mediums in der Lage ist, die Oberfläche des Werkstücks W1 von auf diesem verbleibender Flüssigkeit zu reinigen.

Damit besteht die Möglichkeit, zunächst durch mit dem Reinigungsstrahl 214 aus der Reinigungsvorrichtung 212 die gesamte Oberfläche des Werkstücks W1 von Spänen oder anderen Schmutzpartikeln zu reinigen und andererseits dann verbleibendes flüssiges Medium auf der Oberfläche des Werkstücks W1 mit dem Blasstrahl 218 abzublasen, um somit ein optimal gereinigtes Werkstück für die Messung zur Verfügung stellen zu können.

Dabei kann zusätzlich beispielsweise bei Anwendung des Reinigungsstrahls 214 und/oder Anwendung des Blasstrahls 218 das Werkstück zusätzlich noch aufgrund eines Antriebs der Werkstückaufnahme um die erste Spindelachse 16 rotieren, so dass alle Oberflächen des Werkstücks dem Reinigungsstrahl 214 und/oder dem Blasstrahl 218 ausgesetzt werden können.

Ferner besteht auch noch die Möglichkeit, durch hochtouriges Rotieren lassen des Werkstücks W1 auch noch Verschmutzungen oder Flüssigkeitsreste vom Werkstück W1 abzuschleudern.

Soll ein derartiges hochpräzises Vermessen im Zuge des Produktionsablaufs im Arbeitsraum 60 erfolgen, ist es ferner erforderlich, eine Verschmutzung der Messeinheit im Arbeitsraum 60 der Werkzeugmaschine zu vermeiden.

Um eine Verschmutzung der Messeinheit 80, insbesondere der optischen Messsysteme 102 und 104 beim Einfahren der Messeinheit 80 in den Arbeitsraum 60 zu verhindern, ist bei beiden beschriebenen Ausführungsbeispielen vorzugsweise eine in Fig. 1 als Ganzes mit 220 bezeichnete Absauganlage vorgesehen, welche vor einem Einfahren der Messeinheit 80, gesteuert durch die Maschinensteuerung 170 das im Arbeitsraum 60 während der Bearbeitung der Werkstücke W1 und W2 entstandene Medium, beispielsweise Nebel oder Aerosole aus Luft und Kühlschmierstoff oder Spül- oder Reinigungsmedium absaugt und somit den Arbeitsraum 60 beispielsweise durch über einen Zulufteintritt 222 eintretende Luft spült und gegebenenfalls trocknet.

Ein Produktionsablauf für ein Werkstück mit einem der vorstehend beschriebenen Ausführungsbeispiele einer erfindungsgemäßen Werkzeugmaschine läuft exemplarisch wie folgt ab.

Das Werkstück ist beispielsweise ein Werkstück, das durch eine Vorderseitenbearbeitung als Werkstück W1 in der ersten Werkstückaufnahme 14 bearbeitet wird und für eine Rückseitenbearbeitung als Werkstück W2 in der zweiten Werkstückaufnahme 24.

Zu Beginn eines Produktionsablaufs wird beispielsweise das erste Werkstück W als Werkstück W1 in der ersten Werkstückaufnahme 14 auf der Vorderseite bearbeitet und dann der zweiten Werkstückaufnahme 24 übergeben und auf der Rückseite bearbeitet, während gleichzeitig eine Bearbeitung des zweiten Werkstücks W als Werkstück W1 auf der Vorderseite erfolgt.

Nach Beendigung der Rückseitenbearbeitung des ersten Werkstücks W als Werkstück W2 und der Vorderseitenbearbeitung des zweiten Werkstücks W als Werkstück W1 erfolgt eine Unterbrechung des Produktionsablaufs, vorzugsweise selbsttätig initiiert durch die Maschinensteuerung 170, wobei die Bearbeitung in der Werkzeugmaschine unterbrochen wird.

Zur Vorbereitung des als Werkstück W1 bearbeiteten zweiten Werkstücks W und des als Werkstück W2 auf der Rückseite bearbeiteten ersten Werkstücks W erfolgt zunächst eine Reinigung dieser Werkstücke, beispielsweise mit einer Reinigungsvorrichtung 210 beim ersten Werkstück W1, wobei zunächst mit dem Reinigungsstrahl 214 die Oberfläche von Spänen und Schmutzpartikeln freigespült wird und nachfolgend mit dem Blasstrahl 218 weitere Verschmutzungen und Reste von Flüssigkeit abgeblasen werden.

In gleicher Weise wird bei dem Werkstück W2, das gerade auf der Rückseite bearbeitet wurde, vorgegangen.

Danach erfolgt gegebenenfalls noch ein Abschleudern von Verschmutzungen und Flüssigkeitstropfen von den Werkstücken W1 und W2 in dem jeweils die Werkstückaufnahme 14 bzw. 24 hochtourig drehend angetrieben wird.

Als weiteren Schritt vor einer Vermessung erfolgt durch die Absauganlage 220 ein Absaugen des Mediums im Arbeitsraum, insbesondere ein Absaugen von Luft und Aerosolen aus dem Arbeitsraum, wobei vorzugsweise durch den Zulufteintritt 202 ein Spülen des gesamten Arbeitsraums 60 mit Luft erfolgt.

Nachdem das im Arbeitsraum nach der Bearbeitung und Reinigung der Werkstücke W1 und W2 vorherrschende Medium entfernt wurde und durch Luft aus der Umgebung oder gereinigte externe Luft ersetzt wurde, erfolgt ein Einfahren der Messeinheit 80 beispielsweise in die erste Messstellung M1, in welcher die Außenkontur des Werkstücks W1 in einem einzelnen Werkstückbereich oder in mehreren Werkstückbereichen, wie bereits im Zusammenhang mit den Messstellungen M1 und M2 beschrieben, so dass nach der Bildauswertung des beispielsweise gemäß Fig. 9 erhältlichen Bildes Messwerte dahingehend vorliegen, ob die bearbeitete Kontur den Vorgaben entspricht oder ob starke Abweichungen bestehen.

Bestehen beispielsweise Abweichungen, die entweder auf eine Fehleinstellung oder Grate oder andere Artefakte im Bearbeitungsprozess hinweisen, so kann die Maschinensteuerung 170 selbsttätig den Produktionsablauf vollständig abbrechen.

Liegen die Messwerte für die Kontur des ersten Werkstücks W1 in einem Toleranzbereich, so wird die Maschinensteuerung 170 prinzipiell den Bearbeitungsablauf fortsetzen, die Maschinensteuerung wird jedoch aufgrund der Abweichungen der gemessenen Werte von einem Sollwert die Parameter für die Bearbeitung des nächsten Werkstücks auf der Vorderseite als Werkstück W1 korrigieren.

Eine derartige Korrektur kann beispielsweise durch Änderung der Werkzeugkorrekturdaten erfolgen.

In gleicher Weise wie bei der Vermessung des Werkstücks W1 kann auch, wie in Fig. 7, 10 und 11 dargestellt, ein Vermessen des zweiten Werkstücks W2 erfolgen.

Liegen die Konturwerte für das zweite Werkstück W2 ebenfalls außerhalb eines Toleranzbereichs, so wird die Maschinensteuerung 170 ebenfalls selbsttätig den Produktionsablauf unterbrechen.

Liegen die Konturwerte in einem Toleranzbereich, so wird der Produktionsablauf fortgesetzt, es werden jedoch aber die Abweichungen von Sollwerten dazu eingesetzt, bei der Rückseitenbearbeitung des nächstfolgenden Werkstücks W als Werkstück W2 den Bearbeitungsvorgang entsprechend zu korrigieren, beispielsweise durch Änderung der Werkzeugkorrekturdaten.

Liegen somit bei beiden Messungen die Messwerte in dem Toleranzbereich so wird nach Durchführung der Messung die Maschinensteuerung 170 veranlassen, dass die Messeinheit 80 aus dem Arbeitsraum 60 herausbewegt wird und dann der Produktionsablauf wieder fortgesetzt wird.

Während des weiteren Produktionsablaufs steht die Messeinheit 80 außerhalb des Arbeitsraums 60 und wird somit auf die Temperatur entsprechend der Umgebung der Werkzeugmaschine temperiert, insbesondere erfolgt dabei kein Aufwärmen der Messeinheit 80 aufgrund der durch den Produktionsablauf im Arbeitsraum 60 steigenden Temperaturen oder entsprechend den im Arbeitsraum 60 sich durch den Produktionsablauf einstellenden Temperaturschwankungen, so dass bei einem erneuten Messvorgang die Messeinheit 80 dieselbe Temperatur hat, wie beim ersten Messvorgang und somit stets davon ausgegangen werden kann, dass durch sich ändernde Temperaturen der Messeinheit 80 auftretenden Messungenauigkeiten auftreten.

Bei der Fortsetzung des Produktionsablaufs kann dann zu jeweils definierten Betriebszuständen oder nach einer jeweils Stückzahl von hergestellten Werkstücken erneut der Produktionsablauf unterbrochen und eine Messung in der beschriebenen Art und Weise durchgeführt werden.

Mit der erfindungsgemäßen Werkzeugmaschine besteht somit die Möglichkeit, vollautomatisierte Produktionsabläufe durchzuführen, wobei stets, beispielsweise durch Vorgabe der produzierten Stückzahlen von Werkstücken die Möglichkeit besteht, während des Produktionsablaufs die Qualität der Produktion zu überprüfen und Werkzeugverschleiß oder ähnliche, die Maßgenauigkeit der hergestellten Werkstücke beeinflussende Faktoren ständig durch die Maschinensteuerung 170 zu korrigieren.

Außerdem besteht die Möglichkeit, bei groben Maßungenauigkeiten, das heißt also Konturen außerhalb eines Toleranzbereichs, den Produktionsablauf vollständig zu stoppen und somit zu verhindern, dass eine Vielzahl von nicht ausreichend maßhaltigen Werkstücken hergestellt wird.

## Patentansprüche

1. Werkzeugmaschine umfassend
ein Maschinengestell (12),
ein Maschinengehäuse (10),
einen im Maschinengehäuse (10) angeordneten Arbeitsraum (60), in welchem mindestens eine Werkstückaufnahme (14, 24) sowie mindestens eine Werkzeugaufnahme (46, 56) zur Bearbeitung eines in der mindestens einen Werkstückaufnahme gehaltenen Werkstücks (W) anbeordnet sind, eine der Werkzeugmaschine zugeordnete Messeinrichtung (70), die eine Messeinheit (80) umfasst, wobei die Messeinheit (80) von mindestens einer Ruhestellung (R) in mindestens eine im Arbeitsraum (60) innerhalb des Maschinengehäuses (10) angeordnete Messstellung (M) bewegbar ist und die Messeinheit (80) mindestens ein optisches Messsystem (102, 104) mit einem Messraum (120, 130) aufweiset, in welchen in der Messstellung (M) der Messeinheit (80) das Werkstück (W) hineinragt und vermessbar ist,
**dadurch gekennzeichnet, dass**
die Messeinheit (80) eine Abdeckung (140, 180) für das mindestens eine optische Messsystem (102, 104) aufweist, welche das mindestens eine optische Messsystem (102, 104) und den diesem Messsystem (102, 104) zugeordneten Messraum (120, 130) überdeckt und somit gegen im Arbeitsraum abtropfende Medien schützt.

2. Werkzeugmaschine nach einem der voranstehenden Ansprüche,
**dadurch gekennzeichnet, dass** die Messeinheit (80) in der Ruhestellung (R) auf eine Umgebungstemperatur der Werkzeugmaschine temperierbar ist.

3. Werkzeugmaschine nach einem der voranstehenden Ansprüche,
**dadurch gekennzeichnet, dass** die Messeinheit (80) in der Messstellung (M) durch ein gasförmiges Medium temperierbar ist.

4. Werkzeugmaschine nach einem der voranstehenden Ansprüche,
**dadurch gekennzeichnet, dass** der Messraum (120, 130) des mindestens einen optischen Messsystems (102, 104) durch ein zugeführtes gasförmiges Medium gegen Eindringen von Schmutz schützbar ist.

5. Werkzeugmaschine nach einem der voranstehenden Ansprüche,
**dadurch gekennzeichnet, dass** die Messeinheit (80) der Messeinrichtung (70) längs einer Führungsbahn (78) zwischen der Ruhestellung (R) und der Messstellung (M) bewegbar ist.

6. Werkzeugmaschine nach Anspruch 5, **dadurch gekennzeichnet, dass** die Messeinheit (80) längs der Führungsbahn (78) in einer Führungsrichtung (82) bewegbar ist, die ungefähr parallel zu einer Spindelachse (16,26) einer der mindestens einen Werkstückaufnahme (14, 24) verläuft.

7. Werkzeugmaschine nach einem der voranstehenden Ansprüche,
**dadurch gekennzeichnet, dass** die Abdeckung (140) als das mindestens eine optische Messsystem (102, 104) umschließendes Gehäuse (180) ausgebildet ist und dass insbesondere das Gehäuse (180) mindestens eine Zutrittsöffnung (182, 184, 186) aufweist, durch welche das Werkstück (W) in den Messraum (120, 130) des mindestens eines optischen Messsystems (102, 104) einführbar ist.

8. Werkzeugmaschine nach einem der voranstehenden Ansprüche,
**dadurch gekennzeichnet, dass** einem Messraum (120, 130) des mindestens einen optischen Messsystems (102, 104) eine Zufuhreinrichtung (190) für in den Messraum (120, 130) einströmendes gasförmiges Medium zugeordnet ist.

9. Werkzeugmaschine nach einem der voranstehenden Ansprüche, **dadurch gekennzeichnet, dass** diese eine Reinigungsvorrichtung (210) zum Reinigen des Werkstücks (W) aufweist.

## Claims

1. Machine tool comprising
a machine frame (12),
a machine housing (10),
a working space (60) arranged in the machine housing (10), at least one workpiece receptacle (14, 24) as well as at least one tool receptacle (46, 56) being arranged in said working space for the purpose of machining a workpiece (W) held in the at least one workpiece receptacle, a measuring device (70) associated with the machine tool and comprising a measuring unit (80), wherein the measuring unit (80) is movable from at least one rest position (R) into at least one measuring position (M) arranged in the working space (60) within the machine housing (10) and the measuring unit (80) has at least one optical measuring system (102, 104) with a measuring space (120, 130), the workpiece (W) projecting into said space in the measuring position (M) of the measuring unit (80) and being measurable therein,
**characterized in that** the measuring unit (80) has a cover (140, 180) for the at least one optical measuring system (102, 104), said cover covering the at least one optical measuring system (102, 104) and the measuring space (120, 130) associated with this measuring system (102, 104) and therefore protecting them against media dripping off in the working space.

2. Machine tool as defined in any one of the preceding claims, **characterized in that** the temperature of the measuring unit (80) in the rest position (R) is adjustable to an ambient temperature of the machine tool.

3. Machine tool as defined in any one of the preceding claims, **characterized in that** the temperature of the measuring unit (80) in the measuring position (M) is adjustable by means of a gaseous medium.

4. Machine tool as defined in any one of the preceding claims, **characterized in that** the measuring space (120, 130) of the at least one optical measuring system (102, 104) is protectable by a supplied gaseous medium against any penetration of dirt.

5. Machine tool as defined in any one of the preceding claims, **characterized in that** the measuring unit (80) of the measuring device (70) is movable along a guide path (78) between the rest position (R) and the measuring position (M).

6. Machine tool as defined in claim 5, **characterized in that** the measuring unit (80) is movable along the guide path (78) in a guiding direction (82) extending approximately parallel to a spindle axis (16, 26) of one of the at least one workpiece receptacles (14, 24).

7. Machine tool as defined in any one of the preceding claims, **characterized in that** the cover (140) is designed as a housing (180) surrounding the at least one optical measuring system (102, 104) and that the housing (180), in particular, has at least one entry opening (182, 184, 186), the workpiece (W) being insertable through said opening into the measuring space (120, 130) of the at least one optical measuring system (102, 104).

8. Machine tool as defined in any one of the preceding claims, **characterized in that** a supply device (190) for gaseous medium flowing into a measuring space (120, 130) of the at least one optical measuring system (102, 104) is associated with the measuring space (120, 130).

9. Machine tool as defined in any one of the preceding claims, **characterized in that** this has a cleaning device (210) for cleaning the workpiece (W).

## Revendications

1. Machine-outil, comprenant
un bâti de machine (12),
un carter de machine (10),
un espace de travail (60) ménagé dans le carter de machine (10), où sont disposés au moins un logement de pièce (14, 24) ainsi qu'au moins un logement d'outil (46, 56) pour l'usinage d'une pièce (W) maintenue dans l'au moins un logement de pièce, un dispositif de mesure (70) assigné à la machine-outil, lequel comprend une unité de mesure (80), ladite unité de mesure (80) pouvant être déplacée d'au moins une position de repos (R) vers au moins une position de mesure (M) prévue dans l'espace de travail (60) à l'intérieur du carter de machine (10) et ladite unité de mesure (80) comportant au moins un système de mesure optique (102, 104) avec un compartiment de mesure (120, 130) dans lequel en position de mesure (M) de l'unité de mesure (80), la pièce (W) fait saillie et est mesurable,
**caractérisée en ce que** l'unité de mesure (80) comporte un couvercle (140, 180) pour l'au moins un système de mesure optique (102, 104), lequel recouvre l'au moins un système de mesure optique (102, 104) et le compartiment de mesure (120, 130) associé audit au moins un système de mesure (102, 104) en le protégeant ainsi des fluides s'égouttant dans l'espace de travail.

2. Machine-outil selon l'une des revendications précédentes, **caractérisée en ce que** la température de l'unité de mesure (80) peut être équilibrée en position de repos (R) avec une température ambiante de la machine-outil.

3. Machine-outil selon l'une des revendications précédentes, **caractérisée en ce que** la température de l'unité de mesure (80) peut être équilibrée par un fluide gazeux en position de mesure (M).

4. Machine-outil selon l'une des revendications précédentes, **caractérisée en ce que** le compartiment de mesure (120, 130) de l'au moins un système de mesure optique (102, 104) peut être protégé contre la pénétration de saleté par amenée d'un fluide gazeux.

5. Machine-outil selon l'une des revendications précédentes, **caractérisée en ce que** l'unité de mesure (80) du dispositif de mesure (70) est déplaçable le long d'une glissière (78) entre la position de repos (R) et la position de mesure (M).

6. Machine-outil selon la revendication 5, **caractérisée en ce que** l'unité de mesure (80) est déplaçable le long de la glissière (78) dans une direction de guidage (82) sensiblement parallèle à un axe de broche (16,26) de l'au moins un logement de pièce (14, 24).

7. Machine-outil selon l'une des revendications précédentes, **caractérisée en ce que** le couvercle (140) est réalisé comme boîtier (180) entourant l'au moins un système de mesure optique (102, 104), et **en ce qu'**en particulier le boîtier (180) présente au moins une ouverture d'accès (182, 184, 186) par laquelle la pièce (W) peut être introduite dans le compartiment de mesure (120, 130) de l'au moins un système de mesure optique (102, 104).

8. Machine-outil selon l'une des revendications précédentes, **caractérisée en ce qu'**à un compartiment de mesure (120, 130) de l'au moins un système de mesure optique (102, 104) est associé un dispositif d'amenée (190) pour le fluide gazeux s'écoulant dans le compartiment de mesure (120, 130).

9. Machine-outil selon l'une des revendications précédentes, **caractérisée en ce que** celle-ci comporte un dispositif de nettoyage (210) pour nettoyer la pièce (W).
